# FASCICULE DE BREVET EUROPEEN

(11) **EP 3 731 116 B1**
(45) Date de publication et mention de la délivrance du brevet: **11.08.2021**
(21) Numéro de dépôt: 20171282.5
(22) Date de dépôt: 24.04.2020
(51) Int. Cl.: G06F 21/32, H04L 9/32

(54) **PROCÉDÉ D'AUTHENTIFICATION D'UN DOCUMENT D'IDENTITÉ D'UN INDIVIDU ET D'AUTHENTIFICATION DUDIT INDIVIDU**
VERFAHREM ZUR AUTHENTIFIZIERUNG VON EINEM IDENTIFIKATIONSDOCUMENT FÜR EINE PERSON UND AUTHENTIFIZIERUNG VON DIESER PERSON.
METHOD OF AUTHENTICATING AN IDENTIFICATION DOCUMENT OF AN INDIVIDUAL AND AUTHENTICATING SAID INDIVIDUAL.

(30) Priorité: 25.04.2019 FR 1904406
(43) Date de publication de la demande: 28.10.2020
(73) Titulaire: Idemia Identity & Security France, 92400 Courbevoie (FR)
(72) Inventeur: BAHLOUL, Sébastien, 92400 COURBEVOIE (FR)
(74) Mandataire: Regimbeau

(56) Documents cités:
- EP-A1- 3 386 143
- WO-A1-2012/156648
- MICHAEL ADJEDJ ET AL: "Biometric Identification over Encrypted Data Made Feasible", 14 décembre 2009 (2009-12-14), INFORMATION SYSTEMS SECURITY, SPRINGER BERLIN HEIDELBERG, BERLIN, HEIDELBERG, PAGE(S) 86 - 100, XP019135848, ISBN: 978-3-642-10771-9 * abrégé * * Section 1, Section 4 *

## Description

### DOMAINE DE L'INVENTION

L'invention concerne des procédés d'authentification d'un document d'identité d'un individu et d'authentification de cet individu.

### ETAT DE LA TECHNIQUE

La détention d'un document d'identité (carte d'identité, passeport, permis de conduire, carte de sécurité sociale, etc.) en cours de validité justifie de l'identité d'un individu.

Les documents d'identité consistent en un support généralement en papier ou en plastique sur lequel sont imprimées une photo ainsi que des informations alphanumériques personnelles (nom, prénom, date de naissance, etc.) de son détenteur. On trouve également une bande appelée MRZ (Machine-Readable Zone, Zone de lecture optique), qui contient un code (généralement deux lignes de 36 caractères) résumant les informations alphanumériques du document. Alternativement à la MRZ, on peut trouver un code-barre de type PDF-417 contenant les mêmes informations.

Généralement, les documents d'identité présentent un grand nombre d'éléments de sécurité de haut niveau tels des filigranes ou des hologrammes pour prévenir la falsification. La durée de vie d'un tel document est généralement limitée (10 ou 15 ans), car l'apparence de son possesseur change progressivement, et les éléments de sécurité évoluent.

Lors d'un contrôle d'un individu par une entité, par exemple à l'entrée d'un bâtiment, on lui demande de présenter son document d'identité pour authentification. Il est souhaitable que cette procédure soit la plus rapide possible, tout en étant la plus sécurisée. En effet, le risque est par exemple que des individus recherchés présentent un document d'identité falsifié dans lequel des informations ont été modifiée, par exemple la photographie.

On connaît des demandes FR3047688 puis FR1759292 des procédés d'enrôlement de données destinées à être utilisées pour contrôler automatiquement l'identité d'un individu, et des procédés associés de contrôle d'identité, basées sur un mécanisme très astucieux de génération à partir d'un élément visuel d'un document d'identité (en particulier la photo) d'une donnée de sécurité appelée « Digital Photo Seal ». Cette donnée de sécurité constitue une sorte de signature de l'élément visuel : des images acquises d'un même élément visuel, quelles que soient les conditions d'acquisition (i.e. y compris suite à scan ou photocopie), conduisent à l'obtention de données de sécurité sensiblement identiques. Au contraire, la moindre modification de l'élément visuel entraîne une forte variation de cet élément de sécurité.

Ainsi, il suffit de stocker sur une base de données d'un serveur la donnée de sécurité de référence « attendue » pour un document donné, et de la comparer avec celle « candidate » générée à partir d'une copie de ce document, pour savoir si l'élément visuel de ce document est intègre ou non.

En particulier, pour garantir la sécurité de la donnée de référence sur le serveur, celle-ci est « masquée » par application d'une procédure d'encodage (typiquement une procédure d'esquisse de type sécure sketch) à la donnée de référence et à une donnée d'aléa, et la donnée de référence masquée est stockée dans la base de données avec une empreinte cryptographique, i.e. un haché, d'une concaténation de la MRZ avec ledit aléa.

On peut alors authentifier un document d'identité présenté par un individu sur la base de sa MRZ et de la photographie : une donnée de sécurité candidate est obtenue à partir de la photographie du document présenté, et il est alors possible par application d'une procédure de décodage de retrouver la donnée d'aléa si la photographie du document présenté est identique à celle sur la base de laquelle la donnée de sécurité de référence a été générée, et de vérifier que le haché d'une concaténation de la MRZ avec ledit aléa correspond à celui stocké.

Cette solution apporte entière satisfaction. Et il a même été proposé récemment dans la demande FR1904375 de stocker également dans le serveur des données alphanumériques, en particulier les données dites « visuelles », c'est-à-dire les données imprimées sur le document d'identité telles que des données d'état civil (nom, prénom, adresse, date de naissance, etc.) ou des données techniques telles que la date d'expiration du document d'identité, chiffrées pour garantir la vie privée de l'individu. Cela permet d'éviter de les retaper à la main si besoin.

On note toutefois que bien que les données de l'individu stockées restent chiffrées et donc inaccessibles en soi, il reste nécessaire d'envoyer une image du document d'identité qui comprend d'une certaine façon toutes ces données personnelles, alors même que le service n'en requiert potentiellement qu'un sous-ensemble. De plus un pirate pourrait tenter intercepter les données qui lui sont envoyées, et accéder à la photographie de l'individu ou aux informations personnelles visibles sur l'image du document d'identité.

Il serait ainsi souhaitable de disposer d'une solution simple, fiable, sécurisée, et totalement respectueuse de la vie privée, d'authentification d'un document d'identité.

Il serait également souhaitable de pouvoir authentifier l'individu porteur du document d'identité.

Les documents de l'art antérieur WO2012156648-A1, EP3386143-A1 et XP19135848 divulguent des procédés d'enrôlement de données biométriques.

### PRESENTATION DE L'INVENTION

Selon un premier aspect, l'invention concerne un procédé d'authentification d'un document d'identité mis en oeuvre par un serveur et un équipement client connectés ; l'équipement client disposant d'une première donnée encodée et d'une image acquise dudit document d'identité représentant au moins une photographie d'un individu et une donnée de lecture optique visibles sur ledit document d'identité, et le serveur disposant d'une empreinte cryptographique d'une première concaténation de ladite donnée de lecture optique dudit document d'identité et d'une première donnée d'aléa, dite première empreinte cryptographique ;
le procédé étant caractérisé en ce qu'il comprend la mise en oeuvre d'étapes de ;
(b) Extraction, par les moyens de traitement de données de l'équipement client, par analyse de ladite image acquise dudit document d'identité, de :
   ∘ une information candidate représentative de l'apparence de ladite photographie tel que représentée dans l'image acquise ;
   ∘ ladite donnée de lecture optique tel que représentée dans l'image acquise ;
(c) Calcul par les moyens de traitement de données de l'équipement client, de :
   ∘ une première donnée décodée par application d'une procédure de décodage à ladite information candidate représentative de l'apparence de ladite photographie et à la première donnée encodée, telle que ladite première donnée décodée correspond à la première donnée d'aléa si ladite information candidate représentative de l'apparence de ladite photographie coïncide avec une information de référence représentative de l'apparence de ladite photographie ;
   ∘ une empreinte cryptographique d'une première concaténation de la donnée de lecture optique extraite et de la première donnée décodée ;
(d) génération par les moyens de traitement de données de l'équipement client d'une preuve à divulgation nulle de connaissances du calcul de ladite empreinte cryptographique à partir de la première concaténation de la donnée de lecture optique extraite et de la première donnée décodée;
(e) transmission au serveur de ladite preuve à divulgation nulle de connaissance et de l'empreinte cryptographique calculée ;
(f) vérification par des moyens de traitement de données du serveur que :
   ∘ la preuve à divulgation nulle de connaissance est valide, et
   ∘ l'empreinte cryptographique reçue coïncide avec ladite première empreinte cryptographique dont dispose le serveur.

Selon d'autres caractéristiques avantageuses et non limitatives :
le procédé comprend une étape (a) d'acquisition préalable de ladite image dudit document d'identité représentant au moins une photographie d'un individu et une donnée de lecture optique visibles sur ledit document d'identité par des moyens d'acquisition optique de l'équipement client ;
l'équipement client ne dispose initialement ni de la première donnée encodée ni de l'image acquise dudit document d'identité, l'étape (b) comprenant la réception par l'équipement client de la première donnée encodée depuis le serveur ;
ladite preuve à divulgation nulle de connaissances du calcul de ladite empreinte cryptographique à partir de la première concaténation de la donnée de lecture optique extraite et de la première donnée décodée est une preuve à divulgation nulle de connaissances du fait qu'étant donnée une empreinte cryptographique, il existe une donnée de lecture optique et une première donnée d'aléa telles que leur première concaténation a pour empreinte ladite empreinte cryptographique donnée ;
le procédé comprend une étape antérieure (a0) d'enrôlement de données dudit document d'identité comprenant des sous-étapes de :
   (A) Obtention de la photographie dudit individu visible sur ledit document d'identité et de la donnée de lecture optique du document d'identité ;
   (B) Extraction par analyse de ladite photographie de l'information de référence représentative de l'apparence de ladite photographie ;
   (C) Génération de la première donnée d'aléa ; calcul de la première donnée encodée par application d'une procédure d'encodage à ladite information de référence représentative de l'apparence de ladite photographie et à ladite première donnée d'aléa, et de la première empreinte cryptographique ;
l'étape (a0) comprend en outre une sous-étape (D) de stockage sur des moyens de stockage de données du serveur de la première donnée encodée et de la première empreinte cryptographique ;
le procédé est en outre un procédé d'authentification de l'individu, dans lequel l'étape (d) comprend la génération par les moyens de traitement de données de l'équipement client d'une preuve à divulgation nulle de connaissances du fait qu'une donnée biométrique de référence et une donnée biométrique candidate de l'individu coïncident ; l'étape (e) comprenant la transmission au serveur de ladite preuve à divulgation nulle de connaissance du fait que la donnée biométrique de référence et la donnée biométrique candidate de l'individu coïncident ; et l'étape (f) comprenant la vérification par les moyens de traitement de données du serveur que la preuve à divulgation nulle de connaissance du fait que la donnée biométrique de référence et la donnée biométrique candidate de l'individu coïncident est valide ;
l'équipement client dispose en outre d'une deuxième donnée encodée et de la donnée biométrique candidate de l'individu, et le serveur dispose d'une empreinte cryptographique construite à partir d'une deuxième donnée d'aléa, dite troisième empreinte cryptographique ; l'étape (c) comprenant le calcul par les moyens de traitement de données de l'équipement client de :
∘ une deuxième donnée décodée par application d'une procédure de décodage à ladite donnée biométrique candidate et à la première donnée encodée, telle que ladite deuxième donnée décodée correspond à la deuxième donnée d'aléa si ladite donnée biométrique candidate coïncide avec la donnée biométrique de référence ;
∘ une empreinte cryptographique construite à partir de la deuxième donnée décodée de la même manière que la troisième empreinte cryptographique est construite à partir de la deuxième donnée d'aléa ;
ladite preuve à divulgation nulle de connaissances du fait que la donnée biométrique de référence et la donnée biométrique candidate de l'individu coïncident étant une preuve à divulgation nulle de connaissances du calcul de ladite empreinte cryptographique à partir de la première concaténation de la donnée de lecture optique extraite et de la première donnée décodée; l'étape (e) comprenant en outre la transmission au serveur de l'empreinte cryptographique calculée ; et l'étape (f) comprenant en outre la vérification par des moyens de traitement de données du serveur que l'empreinte cryptographique reçue coïncide avec ladite troisième empreinte cryptographique dont dispose le serveur ;
lors de l'étape (a0), la sous-étape (A) ou la sous-étape (B) comprend l'obtention de ladite donnée biométrique de référence ; et la sous-étape étape (C) comprend en outre la génération de la deuxième donnée d'aléa et le calcul de la deuxième donnée encodée par application de ladite procédure d'encodage à ladite donnée biométrique de référence et à ladite deuxième donnée d'aléa, et de la troisième empreinte cryptographique ;
la troisième empreinte cryptographique est l'empreinte cryptographique d'une concaténation de la deuxième donnée d'aléa et de la première empreinte cryptographique ;
l'étape (a) comprend en outre la génération de la donnée biométrique candidate à partir d'un trait biométrique fourni par des moyens d'acquisition biométrique ;
les moyens d'acquisition biométrique sont les moyens d'acquisition optique de l'équipement client, l'équipement client étant un équipement électronique personnel audit individu, en particulier de type terminal mobile ou carte à puce ;
la procédure de décodage est une procédure complémentaire d'une procédure d'esquisse d'un algorithme de type « secure sketch » ;
la donnée de lecture optique du document d'identité est une donnée de type MRZ, QR code ou PDF417 ;
l'étape (f) comprend également la transmission au serveur d'une donnée personnelle cible de l'individu, la preuve à divulgation nulle de connaissances du calcul de ladite empreinte cryptographique à partir de la première concaténation de la donnée de lecture optique extraite et de la première donnée décodée également une preuve du fait que l'au moins une donnée personnelle cible à transmettre est sélectionnée parmi des données personnelles associées au document d'identité ;
l'équipement client dispose en outre d'un chiffré avec l'empreinte cryptographique d'une deuxième concaténation de la donnée de lecture optique du document d'identité et de la première donnée d'aléa, différente de la première concaténation, d'au moins une donnée personnelle dudit individu, dite deuxième concaténation ; le procédé comprenant le déchiffrement du chiffré de l'au moins une donnée personnelle dudit individu, au moyen de l'empreinte cryptographique de la deuxième concaténation de la donnée de lecture optique extraite et de la donnée décodée ;
ladite donnée personnelle cible est soit extraite de la donnée de lecture optique, soit l'au moins une donnée personnelle chiffrée ;
ladite donnée personnelle dudit individu est une donnée alphanumérique associé audit individu, ladite photographie de l'individu, ladite donnée de lecture optique, et ladite au moins une donnée alphanumérique étant imprimées sur le document d'identité ;
l'information de référence représentative d'une apparence attendue de ladite photographie est une donnée de sécurité de type Digital Photo Seal ;
la ou les preuve(s) à divulgation nulle de connaissances est(sont) un objet cryptographique de type zkSNARK.

Selon un deuxième aspect, l'invention concerne un ensemble d'authentification comprenant un serveur et un équipement client connectés, caractérisé en ce que
- L'équipement client comprend des moyens de traitement de données configurés pour :
   - Extraire, par analyse d'une image acquise d'un document d'identité représentant au moins une photographie d'un individu et une donnée de lecture optique visibles sur ledit document d'identité :
      ∘ une information candidate représentative de l'apparence de ladite photographie tel que représentée dans l'image acquise ;
      ∘ ladite donnée de lecture optique tel que représentée dans l'image acquise ;
   - Calculer :
      ∘ une première donnée décodée par application d'une procédure de décodage à ladite information candidate représentative de l'apparence de ladite photographie et à la première donnée encodée, telle que ladite première donnée décodée correspond à une première donnée d'aléa si ladite information candidate représentative de l'apparence de ladite photographie coïncide avec une information de référence représentative de l'apparence de ladite photographie, le serveur disposant d'une empreinte cryptographique d'une première concaténation de ladite donnée de lecture optique dudit document d'identité et ladite première donnée d'aléa, dite première empreinte cryptographique ;
      ∘ une empreinte cryptographique d'une première concaténation de la donnée de lecture optique extraite et de la première donnée décodée ;
   - générer une preuve à divulgation nulle de connaissances du calcul de ladite empreinte cryptographique à partir de la première concaténation de la donnée de lecture optique extraite et de la première donnée décodée;
   - transmettre au serveur de ladite preuve à divulgation nulle de connaissance et l'empreinte cryptographique calculée ;
- le serveur comprenant des moyens de traitement de données configurés pour vérifier que :
   ∘ la preuve à divulgation nulle de connaissance est valide, et
   ∘ l'empreinte cryptographique reçue coïncide avec ladite première empreinte cryptographique dont dispose le serveur.

Selon un troisième et un quatrième aspect, l'invention concerne un produit programme d'ordinateur comprenant des instructions de code pour l'exécution d'un procédé selon le premier aspect d'authentification d'un document d'identité ; et un moyen de stockage lisible par un équipement informatique sur lequel un produit programme d'ordinateur comprend des instructions de code pour l'exécution d'un procédé selon le premier aspect d'authentification d'un document d'identité.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

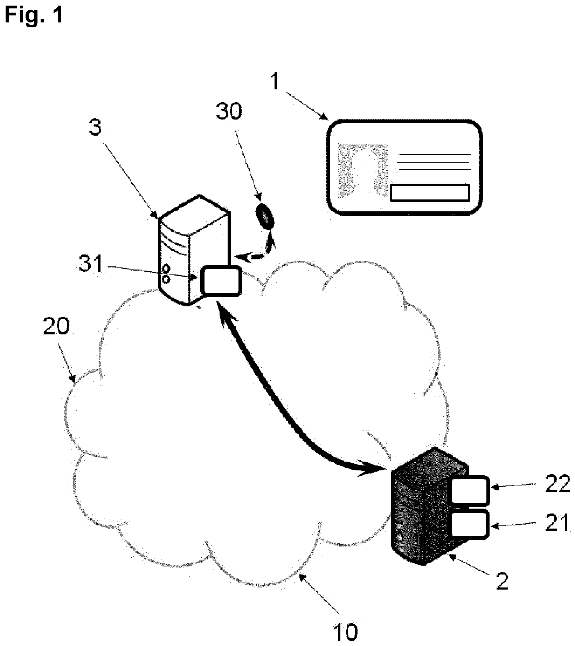

La figure 1 représente schématiquement un système pour la mise en oeuvre des procédés selon l'invention.

### DESCRIPTION DETAILLEE

### Architecture

La présente invention concerne un procédé d'authentification d'un document d'identité 1 d'un individu, incluant possiblement un procédé d'enrôlement d'informations de ce document d'identité 1. Selon un mode de réalisation préféré qui sera décrit plus loin, le présent procédé est un outre un procédé d'authentification dudit individu, i.e. il permet de vérifier, si le document 1 a été valablement authentifié, que de plus son porteur est bien l'individu dont l'identité est présentée par le document 1. On a en effet deux niveaux de fraudes possible :
- Le premier est la falsification du document d'identité, par exemple le changement de la photographie,
- Le deuxième est l'usurpation d'identité, par exemple l'utilisation d'un document d'identité 1 valide par un voleur comme étant le sien.

L'authentification du document 1 permet de détecter le premier niveau de fraude et l'authentification de l'individu permet de détecter le deuxième niveau de fraude.

En référence à la **figure 1**, on a représenté schématiquement une architecture de système d'authentification pour la mise en oeuvre des présents procédés. Ce système comprend au moins un document d'identité 1, un serveur 2 et un équipement client 3 connecté au serveur 2 via un réseau 20 tel qu'Internet.

Le document d'identité 1 est un objet personnel à un individu (de nombreux individus peuvent posséder chacun un tel document d'identité), et constitue un titre officiel, avantageusement émis par un organisme gouvernemental. Ce document peut prendre de nombreuses formes telle qu'une carte d'identité ou un passeport, et peut être éventuellement électronique. Selon un mode de réalisation, il prend la forme d'une carte à puce (de type « smart card ») aux dimensions standard et généralement en PVC ou polycarbonate.

Dans tous les cas, le document d'identité 1 comporte une surface solide sur laquelle sont imprimées un certain nombre d'informations et en particulier :
- Une photographie de l'individu détendeur de la carte (et éventuellement une autre donnée « graphique » telle qu'une signature de l'individu) ;
- une donnée de lecture optique (c'est-à-dire lisible automatiquement, destinée à des ordinateurs), de type MRZ, QR code ou PDF417 (on prendra l'exemple de la MRZ dans la suite du document, mais on comprendra qu'on n'est pas limité à ce type de donnée de lecture optique) ;
- Des données alphanumériques variées, dites « données visuelles », choisies notamment parmi :
   ∘ Numéro complet du document d'identité 1 ;
   ∘ Date d'expiration ;
   ∘ Date de délivrance ;
   ∘ Nom ;
   ∘ Prénom(s) ;
   ∘ Nationalité ;
   ∘ Date de Naissance ;
   ∘ Lieu de Naissance ;
   ∘ Sexe ;
   ∘ Taille ;
   ∘ Adresse ;
   ∘ etc.

Le serveur 2 est un équipement distant, sécurisé, typiquement d'une autorité ou d'un fournisseur de solution de sécurité. Il comprend des moyens de traitement de données 21 (de type processeur) et des moyens de stockage de données 22 (une mémoire, par exemple un disque dur).

L'équipement client 3 est un terminal local comprenant ou connecté à des moyens d'acquisition optique 30 (typiquement un appareil photo ou un scanner), et adapté pour acquérir une image (du document 1 comme on le verra). Il comprend en outre des moyens de traitement de données 31 et des moyens de stockage de données 32. L'équipement client 3 et le serveur 2 comprennent avantageusement des interfaces de communications leur permettant de dialoguer à distance. De manière préférée, le client 3 est un équipement personnel de l'individu porteur du document d'identité 1, par exemple un terminal mobile de l'individu (en particulier de type smartphone).

De façon préférée, dans le cas d'une authentification de l'individu, l'équipement client 3 est capable de générer une donnée biométrique à partir d'un trait biométrique de l'individu. Le trait biométrique peut par exemple être la forme du visage, une empreinte digitale, une empreinte palmaire, un iris de l'individu, etc. L'extraction de la donnée biométrique est mise en oeuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

L'équipement client 3 comprend ou est connecté à ce titre à des moyens d'acquisition biométrique, typiquement un capteur d'image et de manière particulièrement préférée ces moyens d'acquisition biométrique sont les moyens d'acquisition optique 30, par exemple un appareil photographique adapté pour acquérir une photographie du visage en mode « selfie » (on note qu'alternativement des moyens d'acquisition distincts peuvent être utilisés, comme un capteur d'empreinte digitale).

Dans tous les cas, une donnée biométrique de référence utilisée pour l'éventuelle authentification de l'individu est avantageusement une donnée pré-enregistrée en présence d'une autorité (voir plus loin), ou une donnée provenant du document d'identité 1 telle que la photographie.

On note que l'équipement 3 peut prendre de nombreux modes de réalisation. Plus précisément et comme l'on verra, il suffit pour la mise en oeuvre de l'invention que l'équipement client 3 puisse obtenir une image acquise du document d'identité 1 d'une façon ou d'une autre, y compris indirectement, et traiter cette image.

Dans tous les cas, comme expliqué l'équipement client 3 peut acquérir une image d'une image du document d'identité 1, i.e. photographier une photocopie plutôt que le document 1 directement, voire d'une photocopie d'une photocopie, etc. Comme l'on verra, il suffira que l'image acquise représente le document 1. On comprendra que le présent procédé n'est limité à aucune façon d'obtenir cette image et aucune nature en particulier (l'image acquise peut être en noir et blanc, déformée, etc.).

Comme l'on verra, selon un schéma connu mais inhabituel en authentification de document d'identité, l'équipement client 3 est une entité, dite de preuve, qui met en oeuvre l'authentification du document d'identité 1 (voire de l'individu) et fournit le résultat au serveur 2 qui vérifie ce résultat, dit entité de vérification.

On note qu'il est tout à fait possible que d'autres entités soient connectées au serveur 2 et à l'équipement 3, en particulier des serveurs mettent en oeuvre des services consommant les assertions produites par l'équipement 3, i.e. de services souhaitant l'authentification du document 1, par exemple un serveur d'une banque, d'un hôtel, etc.

### Digital Photo Seal

De manière connue les présents procédés utilisent une information représentative d'une apparence d'une photographie (ou un autre élément graphique du document 1), c'est-à-dire une donnée descriptive d'au moins un fragment de cette photographie tel qu'il apparait, i.e. une « signature », qui va permettre des comparaisons.

On désigne comme information « de référence » l'information représentative de l'apparence « théorique » de la photographie, i.e. tel qu'attendue. Par contraste, on désigne comme information « candidate » l'information représentative de l'apparence constatée de la photographie, i.e. tel que représentée dans une image acquise du document 1. On comprend que cette apparence constatée n'est généralement pas parfaitement identique à l'apparence attendue, du fait des conditions des défauts inhérents à l'acquisition d'une image, et à la variabilité des conditions de prise de vue (éclairage, bougé, distance, etc.).

Néanmoins, ladite information représentative de l'apparence est choisie de telle sorte que si deux photographies ont des apparences qui coïncident (i.e. il s'agit de la même photographie même si les conditions de prise de vue ne sont pas identiques), alors leurs informations représentatives coïncident (i.e. présentent une distance selon une métrique donnée inférieure à un seuil) également.

Ainsi, l'information de référence et l'information candidate coïncident si et seulement si l'apparence constatée et l'apparence attendue de la photographie coïncide, i.e. qu'il s'agit bien de la même photographie, en d'autres termes que la photographie imprimée sur le document d'identité 1 n'a pas été frauduleusement altérée. Cette vérification peut être faite pour chaque autre élément graphique tel qu'une signature.

On pourra utiliser comme information représentative de l'apparence de la photographie le « Digital Photo Seal » (DPS) qu'on prendra comme exemple dans la suite de la présente demande, i.e. la donnée de sécurité telle que décrite dans les demandes citées dans l'introduction ou plus précisément la demande EP3206192, basée sur la position de points singuliers de l'élément graphique, ou toute autre « signature » d'un objet graphique tel qu'une photographie.

Le DPS d'une photographie est une caractéristique de cette image qui n'est pas un modèle biométrique, et peut par exemple comprendre un histogramme de gradient orienté (on parle alors d'algorithme à descripteur HOG). On peut alternativement utiliser un algorithme de classification du type employant un réseau de neurones convolutionnel, également connu sous l'acronyme CNN (pour l'anglais Convolutional Neural Network).

### Enrôlement

Le présent procédé vise à ce que le serveur 2 (l'entité de vérification) n'ait besoin que de se voir présenter une preuve de l'authentification du document d'identité 1 (et éventuellement une preuve de l'authentification de l'individu), mais pas de donnée exploitable et a fortiori pas de donnée personnelle.

Ainsi, le prédicat de base est qu'au lancement du procédé l'entité de preuve (l'équipement client 3) dispose au moins d'une image acquise dudit document d'identité 1 représentant au moins une photographie d'un individu et une donnée de lecture optique visibles sur ledit document d'identité 1 (dans laquelle sont lisibles les données personnelles de l'individu), sans qu'aucune de ces données ne doive être transférée au serveur 2.

L'équipement client 3 a besoin en outre de disposer d'une première « donnée encodée » (notée SSKD) obtenue par application d'une procédure d'encodage à l'information DPS de référence représentative de l'apparence de la photographie dudit individu visible sur ledit document d'identité 1 et à une première donnée d'aléa (notée RNGD). En pratique, cette première donnée encodée est généralement stockée par le serveur 2.

Le serveur 2 n'a quant à lui besoin que de disposer d'une empreinte cryptographique d'une première concaténation de la donnée de lecture optique du document d'identité 1 et la première donnée d'aléa RNGD.

Eventuellement, l'équipement client 3 peut disposer d'un chiffré avec une empreinte cryptographique d'une deuxième concaténation de la donnée de lecture optique du document d'identité 1 et de la première donnée d'aléa RNGD, différente de la première concaténation, d'au moins une donnée personnelle dudit individu (à nouveau le chiffré est souvent stocké par le serveur 2).

On comprend qu'aucune de ces données n'est exploitable en soi (en particulier si elles sont toutes stockées sur le serveur 2) car :
- Ladite première donnée encodée SSKD ne permet seule ni de retrouver l'information DPS de référence ni la première donnée d'aléa RNGD ;
- L'empreinte cryptographique d'une première concaténation de la donnée de lecture optique du document d'identité 1 et de la première donnée d'aléa RNGD est une simple empreinte n'apportant aucune information ;
- Le chiffré des données personnelles n'est lisible par personne sans la clé.

Dans un mode de réalisation préféré, le procédé comprend une étape préalable (a0) « d'enrôlement » permettant d'intégrer un individu et son document d'identité 1 et de générer les données dont doit disposer le serveur 2/l'équipement client 3.

Cette étape peut être mise en oeuvre longtemps avant le reste du procédé, et ne nécessite pas d'être réitérée à chaque occurrence du procédé (à noter qu'on peut prévoir de la répéter de temps à autre par sécurité et pour mettre à jour les données personnelles, mais cela reste optionnel). On peut ainsi considérer que lesdites données référencées ci-avant sont prédéfinies pour la mise en oeuvre du procédé.

Ce procédé d'enrôlement de données du document d'identité 1 de l'individu peut être réalisé par le serveur 2 ou par le serveur d'une autorité gouvernementale, et alors les données obtenues sont transmises au serveur 2 et/ou à) l'équipement client 3.

L'enrôlement commence par une étape (A) d'obtention d'une photographie dudit individu visible sur ledit document d'identité 1, d'une donnée de lecture optique du document d'identité 1, et le cas échéant d'au moins une donnée personnelle dudit individu, en particulier une donnée alphanumérique associée audit individu, bien qu'il soit également possible de prendre toute autre donnée relative à la personne tel qu'un template biométrique ou une preuve d'identification, voir plus loin. De manière préférée, ladite donnée personnelle est une donnée alphanumérique associée plus précisément au document d'identité 1, en particulier une « donnée visuelle » imprimée sur le document 1 comme indiqué précédemment, mais on comprend qu'il peut s'agir également d'une adresse e-mail, d'un identifiant d'accès, etc., qui ne sont pas nécessairement imprimés sur le document 1.

Cette étape (A) peut elle-même être mise en oeuvre au moyen d'une image du document d'identité 1 (comme ce sera expliqué pour le procédé d'authentification), mais de façon préférée, pour éviter les problèmes de numérisation et de perte de qualité, ces données (i.e. la photographie, la donnée de lecture optique et/ou la donnée personnelle) sont manipulées directement, en particulier si l'enrôlement est effectué par une autorité gouvernementale. Cela permet par ailleurs une éventuelle mise à jour des données, voir plus loin.

Dans une étape (B) est comme expliqué mise en oeuvre l'extraction par analyse de ladite photographie de l'information (notée DPS par commodité, bien que comme expliqué le présent procédé n'est pas limité au Digital Photo Seal) de référence représentative de l'apparence de ladite photographie, au moyen d'un algorithme connu.

Ensuite, dans une étape (C) la première donnée d'aléa RNGD est générée, de sorte à calculer la première donnée encodée (notée SSKD pour SSK-DATA par commodité, bien que comme expliqué le présent procédé n'est pas limité au secure sketch) par application d'une procédure d'encodage à ladite information DPS de référence représentative de l'apparence de ladite photographie et à ladite première donnée d'aléa RNGD, i.e. SSKD=enc(DPS, RNGD).

La première donnée d'aléa RNGD est comme son nom l'indique une donnée de valeur aléatoire apportant de l'aléa, qui a une importance car sa connaissance va permettre de prouver que l'on dispose bien du document d'identité 1.

De préférence, la procédure d'encodage est une procédure d'esquisse d'un algorithme de type « secure sketch ». Cette procédure d'esquisse est connue de l'homme du métier. Elle notamment décrite dans le document « Fuzzy Extractors: How to Generate Strong Keys from Biometrics and Other Noisy Data », par Dodis et al. (voir la définition 3 donnée en page 11 de ce document).

D'autres procédures d'encodage peuvent être toutefois être utilisées par l'unité de traitement 4 en lieu et place d'une procédure d'esquisse (par exemple des procédures d'algorithmes de type « fuzzy extractor » et de façon générale la logique floue).

A noter que la procédure d'encodage peut être appliquée directement à ladite information de référence représentative de l'apparence de ladite photographie, mais également indirectement, c'est-à-dire à des données dérivées de cette information de référence pour rajouter de l'entropie. Par exemple, on peut utiliser comme donnée dérivée une combinaison de l'information de référence avec la donnée de lecture optique, notamment un certain nombre des premiers bits de son empreinte cryptographique (voir plus loin). En particulier, cette combinaison peut être un « ou exclusif », i.e. XOR(DPS;HMRZ), HMRZ étant les n premiers bits de l'empreinte cryptographique de la donnée de lecture optique (dans l'exemple où c'est la MRZ) où n est le nombre de bits de l'information de référence (le même nombre de bits est nécessaire pour le XOR).

Dans tous les cas, la procédure d'encodage permet de « masquer » la première donnée d'aléa RNGD par le résultat du traitement DPS de la photographie, mais de manière retrouvable au moyen d'une procédure de décodage complémentaire de la procédure d'encodage.

Lorsque la procédure d'encodage utilisée pour l'enrôlement est une procédure d'esquisse d'un algorithme de type « secure sketch », la procédure de décodage est la procédure récupération (« recovery » en anglais) du même algorithme de type « secure sketch ». Une telle procédure de récupération est également connue de l'homme du métier (voir la définition 3 donnée en page 11 du document « Fuzzy Extractors: How to Generate... » susmentionné).

Plus précisément, si on note DpsRef l'information de référence et DpsCand une information candidate (avec SSKD=enc(RNGD, DpsRef)), alors les procédures d'encodage et de décodage sont telles que si DpsCand est suffisamment proche de DpsRef (i.e. différent de moins d'un seuil, ce qui est normalement le cas si on extrait l'information représentative de la même photographie que celle à partir de laquelle on a généré l'information de référence, même si on note qu'il reste impossible que les deux valeurs coïncident, on aura toujours |DpsCand-DpsRef|>0) alors la première donnée décodée est égale à la première donnée d'aléa RNGD.

Si au contraire DpsCand n'est pas suffisamment proche de DpsRef, alors la première donnée décodée n'est pas la bonne valeur de la première donnée d'aléa.

Mathématiquement, la procédure de décodage donne, pour une valeur de la première donnée encodée SSKD et pour une valeur d'information candidate DpsCand, « la valeur x=dec(SSKD, DpsCand) telle qu'il existe une valeur ε de norme inférieure à un seuil donné vérifiant SSKD=enc(x,DpsCand+ε) », x étant égal à la valeur de la première donnée d'aléa RNGD si on a bien DpdCand+ε=DpsRef.

On rappellera que de telles procédures d'encodage et de décodage sont connues de l'homme du métier, et peuvent faire l'objet de nombreux modes de réalisation. Il sera d'ailleurs possible d'augmenter l'entropie de la donnée encodée en appliquant la procédure d'encodage à davantage de données que seules l'information représentative de l'apparence de ladite photographie et la première donnée d'aléa.

Dans une étape (D) sont enfin stockées sur les moyens de stockage de données 22 du serveur 2 et/ou les moyens de stockage de données 32 de l'équipement client 3 (le cas échéant après transmission) :
- Ladite première donnée encodée SSKD ;
- L'empreinte cryptographique d'une première concaténation de la donnée de lecture optique du document d'identité 1 et de la première donnée d'aléa RNGD ;
- L'éventuel chiffré avec l'empreinte cryptographique d'une deuxième concaténation de la donnée de lecture optique du document d'identité 1 et de la première donnée d'aléa RNGD, différente de la première concaténation, de l'au moins une donnée personnelle dudit individu.

Ces données, dans le cas où elles sont stockées sur le serveur 2, peuvent être indexées dans la mémoire 22 avec une empreinte cryptographique d'un identifiant du document d'identité 1, généralement obtenu de la MRZ.

Par empreinte cryptographique, ou haché (en anglais « hash »), on entend le résultat d'une fonction de hachage cryptographique prédéterminée.

De manière préférée, les première et deuxième concaténations correspondent à des concaténations dans deux sens différents, par exemple MRZ|RNGD pour la première concaténation et RNGD|MRZ pour la deuxième concaténation, mais on pourra utiliser toute autre construction telle que deux concaténations dans le même ordre mais incluant un caractère prédéterminé au milieu, par exemple MRZ|1|RNGD et MRZ|2|RNGD.

Il est entendu que la donnée de lecture optique du document d'identité 1 et la première donnée d'aléa RNGD peuvent être considérés comme des séquences de bits. Le nombre de bits de la concaténation est ainsi la somme des nombres de bits respectifs de la donnée de lecture optique du document d'identité 1 et de la première donnée d'aléa RNGD.

Par commodité, on note première empreinte ladite empreinte cryptographique de la première concaténation (h(MRZ|RNGD) en particulier), et deuxième empreinte l'empreinte cryptographique de la deuxième concaténation (h(RNGD|MRZ) en particulier).

L'astuce de ces multiples concaténations permet la formation de plusieurs empreintes complètement indépendantes à partir des mêmes données. En effet, connaissant la première empreinte (qui est stockée sur la mémoire 22, et qui pourrait donc être obtenue par un pirate), il n'est pas possible d'obtenir la deuxième empreinte. Il reste nécessaire pour obtenir celle-ci de détenir la valeur de la première donnée d'aléa RNGD, laquelle ne peut être retrouvée qu'en disposant de l'information de référence.

Ainsi, la ou les données personnelles chiffrées avec la deuxième empreinte cryptographique (i.e. la deuxième empreinte est utilisée comme clé) restent accessible seulement au détendeur du document d'identité 1, de sorte que le serveur 2 ne peut manipuler ni ne connaitre les données personnelles de l'utilisateur, qui peuvent être stockées en toute sécurité.

La première empreinte peut être associée dans le serveur 2 à un descripteur de l'état du document d'identité 1, par exemple « OK », « Expiré » ou « KO ».

A noter que le procédé d'enrôlement peut être répété à intervalles réguliers pour vérifier ou mettre à jour les données personnelles. Les données récentes et fiables pourront être récupérées depuis une entité gouvernementale. De surcroit, un document d'identité 1 n'a qu'une durée de vie limitée, et doit régulièrement être renouvelé.

Selon le mode de réalisation préféré permettant en outre l'authentification de l'individu porteur du document d'identité 1, l'équipement client 3 dispose avantageusement également d'une deuxième donnée encodée (notée SSKT, pour SSK-TEMPLATE) obtenue par application d'une procédure d'encodage (typiquement la même procédure d'encodage que pour la première donnée encodée) à une donnée biométrique de référence et à une deuxième donnée d'aléa (notée RNGT) ; et le serveur 2 dispose en outre d'une empreinte cryptographique construite à partir de la deuxième donnée d'aléa RNGT. A nouveau toutes ces données peuvent être stockées sur les moyens de stockage de données 22 du serveur 2 (et associées aux autres données)

Ladite empreinte cryptographique construite à partir de la deuxième donnée d'aléa RNGT, dite troisième empreinte cryptographique, peut être une empreinte cryptographique directement de la deuxième donnée d'aléa RNGT, ou d'une fonction quelconque (par exemple une concaténation) de la deuxième donnée d'aléa RNGT et d'une autre donnée, avantageusement de la première empreinte cryptographique (l'empreinte cryptographique d'une première concaténation de la donnée de lecture optique du document d'identité 1 et de la première donnée d'aléa RNGD).

On comprend qu'aucune de ces données n'est à nouveau exploitable en soi car :
- Ladite deuxième donnée encodée SSKT ne permet seule ni de retrouver la donnée biométrique de référence ni la deuxième donnée d'aléa RNGT ;
- L'empreinte cryptographique construite à partir de la deuxième donnée d'aléa RNGT est une simple empreinte n'apportant aucune information.

Dans un tel mode de réalisation, l'étape (a0) d'enrôlement peut en outre comprendre :
- A l'étape (A) ou à l'étape (B), l'obtention de ladite donnée biométrique de référence (notée TempRef pour template de référence), par exemple depuis la photographie du document d'identité 1 ;
- A l'étape (C), la génération de la deuxième donnée d'aléa RNGT de sorte à calculer la deuxième donnée encodée SSKT par application de ladite procédure d'encodage, i.e. SSKT=enc(TempRef, RNGT) ;
- A l'étape (D) le stockage sur les moyens de stockage de données 22 du serveur 2 et /ou les moyens de stockage de données 32 de l'équipement client 3 (le cas échéant après transmission) de ladite deuxième donnée encodée SSKT et de l'empreinte cryptographique construite à partir de la deuxième donnée d'aléa RNGT.

A noter que ces actions supplémentaires liées à l'enrôlement biométrique peuvent être mise en oeuvre dans de nouvelles étapes (A') à (D'), i.e. pas nécessairement simultanément avec les actions liées à l'enrôlement du document d'identité 1.

Par ailleurs, il reste possible de mettre en oeuvre un procédé d'authentification de l'individu sans nécessiter de deuxième donnée d'aléa RNGT et de deuxième donnée encodée SSKT, notamment en utilisant la donnée biométrique de référence comme une donnée personnelle, chiffrée au moyen de la deuxième empreinte cryptographique.

### Authentification du document d'identité

On suppose à présent que l'enrôlement a été réalisé avec succès, et que le document d'identité est à présent utilisable.

Dans un mode de réalisation préféré, le procédé d'authentification commence par une étape (a) d'acquisition d'une façon ou d'une autre (par exemple via les moyens d'acquisition 30 de l'équipement client 3) d'une image du document d'identité 1, l'image représentant au moins la photographie de l'individu et la donnée de lecture optique du document d'identité 1 (la MRZ) visibles sur ledit document d'identité 1. Préférentiellement, ladite image représente tout le document d'identité 1, du moins toute une face. Comme expliqué, il peut être nécessaire d'acquérir plusieurs images, par exemple pour voir toutes les faces.

Typiquement, c'est l'individu qui prend en photo son document d'identité 1 avec son terminal mobile.

On va à présent décrire la partie principale du procédé d'authentification d'un individu présentant un document d'identité 1 comme étant le sien, et fournissant à ce titre une image acquise de ce document d'identité 1.

L'objectif est de vérifier que l'étape (a) s'est bien déroulée comme décrit précédemment, et qu'on n'est pas en présence d'un faux (par exemple une image qui aurait été modifiée frauduleusement). L'individu ou toute autre entité qui souhaite l'authentification du document 1 veut prouver cela serveur 2.

Dans une étape (b), les moyens de traitement de données 31 de l'équipement client 3 analysent l'image, de sorte à extraire :
- une information (DPS) candidate représentative de l'apparence de la photographie tel que représenté dans l'image acquise ;
- la donnée de lecture optique du document d'identité 1

L'extraction de l'information candidate comprend l'identification de la photographie qui apparait dans l'image, et l'obtention de l'information candidate de la même façon que l'information de référence a été obtenue lors de l'enrôlement. L'identification de la photographie peut être faite grâce à des modèles et des masques (en effet, les documents d'identité ont toujours la même organisation), et ainsi, l'analyse de l'image peut comprendre la reconnaissance d'un contour du document d'identité 1, le recadrage de ce contour, et l'application des masques prédéterminés. Pour cela, des réseaux de neurones à convolutions adaptés pourront être utilisés astucieusement. Similairement, en ce qui concerne la donnée de lecture optique il existe des algorithmes permettant son extraction automatique, ce d'autant plus que les zones de type MRZ sont tout spécialement prévues pour être lues facilement par un ordinateur.

Une fois que la photographie a été « isolée » sur l'image, on applique les mêmes algorithmes que ceux qui ont été appliqués sur la photographie d'origine pour obtenir les informations candidates représentatives de l'apparence de la photographie tel que représenté.

On comprend que les informations de référence et candidate devront être obtenues de manière identique de sorte à pouvoir être comparées.

De manière préférée, l'étape (b) comprend l'interrogation du serveur 2 de sorte à récupérer au moins ladite première donnée encodée SSKD si elle est stockée sur ce serveur 2 (on verra plus loin les autres données qui peuvent être requises), par exemple en lui fournissant l'empreinte cryptographique de l'identifiant du document 1 (cet identifiant pouvant être obtenu de la MRZ par exemple) : le serveur 2 transmet la première donnée encodée associée à l'empreinte reçue. On note qu'alternativement, ladite première donnée encodée peut avoir été fournie il y a longtemps et stockée depuis sur les moyens de stockage de données 32 de l'équipement client 3.

Dans une étape (c), les moyens de traitement de données 31 de l'équipement client 3 calculent une première donnée décodée par application d'une procédure de décodage à ladite information candidate (DPS) représentative de l'apparence de ladite photographie et à ladite première donnée encodée reçue depuis le serveur 2.

Comme expliqué, la procédure de décodage (et la procédure d'encodage) est telle que ladite première donnée décodée correspond à la première donnée d'aléa RNGD si ladite information candidate représentative de l'apparence de ladite photographie coïncide avec l'information de référence représentative de l'apparence de ladite photographie. En d'autres termes, si l'information de référence et l'information candidate sont suffisamment proches, la valeur décodée correspondra à la valeur d'aléa RNGD utilisée pour obtenir cette première donnée encodée SSKD.

De façon générale, le résultat d'une comparaison de l'information candidate et de l'information de référence doit montrer qu'elles sont identiques, ou du moins présenter une distance inférieure à un seuil d'erreur prédéterminé. Par exemple, pour les éléments graphiques de type photographie, des données de sécurité de type Digital Photo Seal coïncident si elle différent de moins de 10%.

On comprend ainsi que la valeur de la première donnée d'aléa « masquée » par le DPS peut être récupérée si l'utilisateur dispose d'une photographie identique à celle utilisée lors de l'enrôlement dont est tirée l'information de référence.

L'étape (c) comprend en outre le calcul de l'empreinte cryptographique d'une première concaténation de la donnée de lecture optique extraite et de la première donnée décodée. En d'autres termes, l'équipement client 3 tente de reconstituer la première empreinte en effectuant la même première concaténation de la donnée de lecture optique extraite et de la première donnée décodée.

Si :
- la donnée de lecture optique extraite coïncide avec la donnée de lecture optique utilisée lors de l'enrôlement ; et
- la première donnée décodée coïncide avec la première donnée d'aléa RNGD ; Alors la première concaténation donnera exactement le même résultat et on arrivera à nouveau à la première empreinte.

Dans tous les autres cas, l'entropie des fonctions de hachage cryptographique fait qu'on arrivera à un résultat très différent. Si le document 1 a été altéré (par exemple en remplaçant la photographie), alors les informations candidates et de référence correspondantes ne coïncideront pas, on obtiendra donc une fausse valeur de l'aléa et donc de la première empreinte, et l'authentification sera rejetée.

A ce stade, l'équipement client 3 pourrait simplement envoyer la première empreinte calculée à l'étape (c) et laisser les moyens de traitement de données 21 du serveur 2 vérifier qu'elle coïncide avec celle dont il dispose (i.e. vérifier qu'une empreinte cryptographique d'une première concaténation de la donnée de lecture optique extraite et de la première donnée décodée coïncide avec l'empreinte cryptographique de la première concaténation de la donnée de lecture optique du document d'identité 1 et de première la donnée d'aléa stockée sur les moyens de stockage de données 22 du serveur 2). Cependant, la bonne valeur de la première empreinte peut être connue, ne serait-ce d'une précédente authentification du document 1. C'est pourquoi l'équipement client 3 va prouver qu'il a obtenu cette première empreinte de manière correcte, i.e. à partir du document d'identité 1, et ce de manière non-interactive, c'est-à-dire avec seulement qu'un « aller » d'information de l'équipement client 3 vers le serveur 2, et pas de « retour ». Et surtout comme expliqué, le serveur 2 ne va recevoir ni la première donnée d'aléa RNGD, ni l'information candidate représentative de l'apparence de ladite photographie, ni la donnée de lecture optique (ni aucune donnée permettant de remonter jusqu'à ces dernières), bien qu'il soit pourtant possible pour le serveur 2 de savoir avec certitude que la première empreinte a été correctement calculée. De surcroit, toutes les données transmises ne sont pas sensibles, et pourraient être interceptées sans que cela ne pose de problème.

Pour cela, on utilise un protocole cryptographique générant une « preuve » du calcul de ladite empreinte cryptographique à partir de la première concaténation de la donnée de lecture optique extraite et de la première donnée décodée, cette preuve ne révélant rien d'autre que le fait que la donnée de lecture optique et la première donnée décodée (i.e. la première donnée d'aléa RNGD) sont bien possédées par le producteur de la preuve. En d'autres termes, l'empreinte cryptographique n'est pas simplement possédée par l'équipement 3, mais également la donnée qui se hache en cette empreinte cryptographique.

Le protocole Pinocchio présenté dans la publication « Bryan Parno, Craig Gentry, Jon Howell, and Mariana Raykova, Pinocchio: Nearly Practical Verifiable Computation, in Proceedings of the IEEE Symposium on Security and Privacy, IEEE, 21 May 2013 » a été un des premiers protocoles de calcul vérifiable permettant à l'exécutant de calculer de manière vérifiable l'application d'une fonction quelconque et au donneur d'ordre de vérifier la preuve associée en un temps de calcul inférieur à celui nécessaire pour réaliser le calcul lui-même.

Dans une étape (d), les moyens de traitement de données 31 de l'équipement client 3 agissant comme entité de preuve génèrent pour cela une preuve à divulgation nulle de connaissances du calcul de ladite empreinte cryptographique à partir de la première concaténation de la donnée de lecture optique extraite et de la première donnée décodée, i.e. que la première empreinte cryptographique a été effectivement calculée, et de manière correcte.

Plus précisément, ladite preuve à divulgation nulle de connaissances garantit l'affirmation suivante : « étant donnée une empreinte cryptographique H, il existe une donnée de lecture optique et une première donnée d'aléa RNGD (la donnée décodée) telles que leur première concaténation a pour empreinte cette empreinte cryptographique H donnée ».

Ainsi, on peut lier l'empreinte cryptographique fournie à la donnée de lecture optique et à l'information candidate représentative de l'apparence de la photographie mais on ne peut pas obtenir d'informations sur le contenu de ces données. Le protocole cryptographique donne une preuve rapide à vérifier (moins d'une demi-seconde) et qu'on ne peut pas falsifier : il est quasi impossible (probabilité inférieure à 1/2⁸⁰, voire inférieur à 1/2¹²⁸ selon les paramètres choisis pour réaliser la preuve, celle-ci étant alors plus lente à réaliser) de faire accepter une preuve de l'affirmation ci-dessus si le processus ne s'est pas déroulé conformément à ce qui est spécifié.

Dans la réalisation de la preuve, l'entité de preuve 3 utilise la possibilité de réaliser des preuves à divulgation nulle de connaissance pour cacher les données du document d'identité 1. Ainsi la preuve ne donne aucune information sur ces données elles-mêmes. On verra plus loin comment la preuve peut être générée.

Dans une étape (e), l'équipement client 3 transmet au serveur 2 ladite preuve à divulgation nulle de connaissance générée à l'étape (d), et l'empreinte cryptographique calculée à l'étape (c).

Ainsi, dans une étape (f), les moyens de traitement de données 21 du serveur 2 vérifient que la preuve à divulgation nulle de connaissance est valide, et que l'empreinte cryptographique reçue coïncide avec celle de la première concaténation d'une donnée de lecture optique dudit document d'identité 1 et d'une première donnée d'aléa dont dispose le serveur 2.

Si la preuve n'est pas valide, c'est que la première empreinte cryptographique n'a pas été valablement obtenue, et donc que potentiellement l'individu ne dispose pas du document d'identité et tente d'usurper une identité. Si la preuve est valide mais que l'empreinte cryptographique reçue ne correspond pas à celle dont dispose l'entité de vérification 2, c'est que la première donnée décodée ne correspond pas au premier aléa ou que la donnée de lecture extraite n'est pas celle d'origine, i.e. que le document d'identité 1 a été falsifié (au niveau de la photographie ou de la donnée de lecture optique). Une alerte pour utilisation frauduleuse peut être émise.

Si on a retrouvé la première empreinte et que la preuve est valide, c'est que le document d'identité 1 est valide, i.e. non falsifié. On peut éventuellement consulter un descripteur associé à la première empreinte pour obtenir le statut du document 1 : « OK, « Expiré », « KO ». Par exemple, ce statut peut définir si le détenteur du document 1 a le droit de pénétrer dans une zone à l'entrée de laquelle a lieu le contrôle.

S'il a le statut OK il peut rentrer, et s'il a le statut Expiré c'est qu'il a normalement le droit de rentrer mais qu'il faut qu'il mette à jour son accès. S'il a le statut KO cela signifie qu'il a bien été reconnu, mais qu'il n'a pas le niveau d'autorisation suffisant.

Alternativement, le serveur 2 peut, lorsque le document 1 est authentifié avec succès, transmettre à l'éventuelle entité connectée auprès de laquelle l'individu souhaite l'authentification (par exemple un serveur mettant en oeuvre un service comme expliqué) une autorisation par exemple chiffrée avec une clé publique de ladite entité (l'autorisation en elle-même est typiquement un token à usage unique). Alternativement, une telle autorisation chiffrée peut être transmise à l'équipement client 3, pour retransmission à l'entité connectée, et déchiffrement et vérification par cette dernière. Un tel mode de réalisation est particulièrement avantageux car il permet une confidentialité totale : non seulement le serveur 2 n'a pas accès aux données personnelles de l'individu, mais en plus il n'a aucun contact avec l'entité connectée auprès de laquelle l'individu souhaite l'authentification de sorte qu'il n'a même pas la possibilité de savoir pourquoi l'authentification est requise.

A noter que la consultation d'un registre et/ou l'éventuelle émission d'une autorisation d'accès peut n'être faite que si une authentification de l'individu lui-même est accomplie, voir plus loin.

A ce stade, l'individu peut se voir demander la fourniture d'au moins une donnée personnelle (dite donnée personnelle cible dans la suite de la présente description), par exemple des données alphanumériques pour remplir un registre s'il s'est vu autoriser l'accès, ou pour remplir un formulaire demandé par le service mis en oeuvre par l'entité connectée. A présent, il va pouvoir utiliser astucieusement la deuxième concaténation pour obtenir automatiquement ces données.

Pour cela, dans une éventuelle étape supplémentaire (g) (qui peut éventuellement être conditionnée à un statut particulier, par exemple uniquement si l'individu a le droit d'aller plus loin, et/ou à l'authentification de l'individu), alors les moyens de traitement de données 21 transmettent à l'équipement client 3 (s'il n'en dispose pas encore) pour déchiffrement l'au moins une donnée personnelle dudit individu chiffrée stockée sur les moyens de stockage de données 22 du serveur 2. Comme expliqué, ce déchiffrement peut se faire au moyen de l'empreinte cryptographique d'une deuxième concaténation de la donnée de lecture optique extraite et de la donnée décodée.

En effet, à ce stade on sait que la donnée décodée correspond à la donnée d'aléa et que l'individu a pu reconstituer avec succès la première empreinte sur l'équipement client 3. En changeant seulement de concaténation (en particulier en inversant la MRZ et l'aléa), et en appliquant à nouveau la fonction de hachage cryptographique, il peut reconstituer la deuxième empreinte, qui constitue la clé privée des données personnelles.

Tout ou partie de celles-ci, à sa demande, peuvent être sont alors retransférées au serveur 2.

A noter qu'on pourrait prévoir que l'utilisateur soit autorisé à en profiter pour mettre à jour ces données personnelles : si par exemple son adresse a changé, il modifie les données avant de les rechiffrer, et de retransmettre l'ensemble au serveur 2 pour stockage.

On voit bien qu'avec une telle solution, aucune donnée sensible n'est ni stockée du côté serveur 2, ni transmise depuis l'équipement client 3 (seulement une empreinte cryptographique inexploitable) et donc qu'une attaque ne compromettrait si la sécurité de la solution, ni les données personnelles des utilisateurs.

### Alternatives

Plutôt que de fournir une donnée personnelle cible requise dans une étape (g) nécessitant une interaction supplémentaire, on peut simplifier le procédé en fournissant cette donnée en même temps que la preuve à l'étape (e). Pour cela, il suffit d'adapter la preuve à divulgation nulle de connaissance de sorte à ce qu'elle soit également une preuve du fait que l'au moins une donnée personnelle cible à transmettre est bien sélectionnée parmi des données personnelles associées au document d'identité 1.

En effet la preuve peut impliquer des paramètres publics supplémentaires tels que cette donnée personnelle cible.

Selon un premier mode de réalisation, ladite donnée personnelle cible est un fragment de la donnée de lecture optique, par exemple le simple nom de l'individu, i.e. elle est extraite de la donnée de lecture optique, et la preuve est ainsi une preuve de cette extraction. Plus précisément, la preuve à divulgation nulle de connaissance peut être une preuve de l'affirmation suivante : « étant donnée une empreinte cryptographique et une donnée personnelle cible, il existe une donnée de lecture optique et une première donnée d'aléa RNGD (la première donnée décodée) telles que :
- leur première concaténation a pour empreinte cette empreinte cryptographique donnée, et
- la donnée personnelle cible est extraite de la donnée de lecture optique ».

Selon un deuxième mode, l'éventuel chiffré avec une empreinte cryptographique d'une deuxième concaténation de la donnée de lecture optique du document d'identité 1 et de la première donnée d'aléa RNGD, différente de la première concaténation, d'au moins une donnée personnelle dudit individu, est disponible dès l'origine sur l'équipement client 3, ou bien directement fourni par le serveur 2 (par exemple à l'étape (b), en même temps que la première donnée encodée). En effet, une telle fourniture n'est pas problématique de fait du chiffrement.

Alors, comme expliqué, si l'individu peut reconstituer avec succès la première empreinte sur l'équipement client 3, il peut reconstituer la deuxième empreinte, qui constitue la clé privée des données personnelles, en changeant seulement de concaténation (en particulier en inversant la MRZ et la première donnée d'aléa), et en appliquant à nouveau la fonction de hachage cryptographique.

La preuve à divulgation nulle de connaissance est alors une preuve du fait que la donnée personnelle cible provient des données personnelles chiffrées, i.e. garantit l'affirmation suivante « étant donnée une empreinte cryptographique et une donnée personnelle cible, il existe une donnée de lecture optique, une première donnée d'aléa RNGD (la première donnée décodée) et une donnée personnelle chiffrée telles que :
- la première concaténation de la donnée de lecture optique et de la première donnée d'aléa RNGD a pour empreinte cette empreinte cryptographique donnée, et
- ladite donnée personnelle chiffrée se déchiffre en ladite donnée personnelle cible ».

On note que d'autres alternatives sont possibles, par exemple si la donnée personnelle à transmettre est la photographie de l'individu, et l'homme du métier saura adapter la preuve au cas par cas.

### Génération de preuve

De façon préférée, ladite preuve à divulgation nulle de connaissances est un objet cryptographique de type zkSNARK.

zkSNARK signifie « zero-knowledge Succinct Non Interactive ARgument of Knowledge », i.e. Argument de connaissance non interactive à divulgation nulle de connaissances. Il s'agit d'une primitive cryptographique construite autour de la notion de preuve. Les chercheurs en informatique théorique et en cryptographie se sont intéressés depuis longtemps à la notion de preuve. Il existe des résultats théoriques permettant de produire une preuve très courte et sécurisée d'un algorithme mais le temps pour réaliser cette preuve est hors de portée et le restera malgré l'augmentation de la puissance de calcul des ordinateurs. Une des raisons tient au pouvoir que l'on donne à l'entité qui réalise la preuve, l'équipement client 3 (appelée aussi le prouveur). Dans les résultats théoriques sur les preuves, le prouveur a une puissance de calcul infinie et les preuves restent sécurisées malgré cela.

La notion de preuve a ensuite été relâchée, le protocole ne cherchant à se protéger que d'un prouveur qui aurait une puissance de calcul importante mais bornée. Le résultat du protocole n'est plus une preuve mais un argument. C'est à partir de cette notion d'argument que les systèmes pratiques de calcul vérifiables se sont construits. Une exigence supplémentaire dans un système produisant un argument est que cet argument soit non interactif : le vérifieur et le prouveur n'ont pas besoin d'interagir pour produire l'argument.

Depuis 2010, des réalisations de zkSNARKs ont été présentées : il s'agit d'arguments dont la taille est courte (quelques éléments d'une courbe elliptique), qui ne nécessitent pas d'interactivité et qui de plus permettent au prouveur d'effectuer une preuve à divulgation nulle de connaissance i.e. la preuve ne contient aucune information non triviale sur les entrées fournies par le prouveur.

Il existe plusieurs protocoles qui réalisent concrètement des zkSNARKs, et l'homme du métier pourra les utiliser indifféremment dans le présent procédé :
- Le protocole Pinocchio déjà évoqué ;
- Le protocole Gepetto, présenté dans la publication « Craig Costello, Cedric Fournet, Jon Howell, Markulf Kohlweiss, Benjamin Kreuter, Michael Naehrig, Bryan Parno, and Samee Zahur, Geppetto: Versatile Verifiable Computation, in Proceedings of the IEEE Symposium on Security and Privacy, IEEE, 18 May 2015 », qui est une amélioration de Pinocchio
- Le protocole présenté dans la publication et suivantes « Eli Ben-Sasson, Alessandro Chiesa, Daniel Genkin, Eran Tromer, Madars Virza. SNARKs for C: Verifying Program Executions Succinctly and in Zéro Knowledge. In Proceedings of the 33rd Annual International Cryptology Conférence, CRYPTO '13, pages 90-108, 2013", implémenté open-source sous la forme d'une librairie appelée libsnark, optimisant le protocole produisant un zkSNARK dans Pinocchio en améliorant l'expressivité, c'est-à-dire le type de programmes ou d'algorithme qu'il est possible de vérifier.

Pour prendre l'exemple du protocole Pinocchio, ce protocole comporte plusieurs parties :
1. Un programme classique est traduit sous la forme d'un circuit arithmétique, c'est-à-dire d'un ensemble de relations entre les entrées et les sorties du programme traduites uniquement à l'aide d'additions et de multiplications d'éléments d'un corps fini. Il faut remarquer que tous les programmes peuvent en théorie être traduits sous cette forme mais qu'une partie seulement de ces programmes admet une traduction efficace sous forme de circuit.
2. Le circuit arithmétique obtenu est représenté efficacement à l'aide de trois familles de polynômes auxquelles s'ajoute un polynôme supplémentaire, appelé polynôme cible. Ces familles de polynômes forment des « Quadratic Arithmetic Programs » (QAPs). Elles encodent les relations entre les entrées et les sorties de chaque porte multiplicative du circuit, les relations des portes additives étant intégrées dans la première porte multiplicative qui suit dans le calcul.

Ces QAPs sont reliés au calcul vérifiable par le point suivant : un calcul y = C(x) est correct pour une entrée x si et seulement si toutes les relations décrivant le circuit arithmétique correspondant sont satisfaites en fixant comme valeur d'entrée x et comme valeur de sortie y.

Les QAPs permettent en quelque sorte de compresser toutes les contraintes à vérifier dans une seule relation à vérifier : un polynôme construit à partir de la valeur x et des trois familles du QAP doit diviser le polynôme cible.

3. Un protocole cryptographique prend alors en entrée un QAP associé à un programme, génère des clés d'évaluation et de vérification qui utilisent des courbes elliptiques pour cacher les relations polynômiales. Le polynôme prouvant que le calcul a été effectué correctement est alors calculé directement à l'aide des relations cachées dans la courbe elliptique. La relation de divisibilité se traduit uniquement à l'aide d'un nombre constant d'éléments de la courbe elliptique, c'est-à-dire que la preuve est de taille constante. La vérification de cette preuve est extrêmement rapide.

Le protocole permet de plus d'obtenir que des entrées du calcul fournies par le prouveur soient privées : il permet de cacher les valeurs du prouveur dans la réalisation de la preuve en les multipliant par un multiple du polynôme cible, ce qui ne modifie pas le fait que le polynôme « preuve » soit divisible par le polynôme cible.

Ce polynôme « preuve », quand il est caché dans une courbe elliptique constitue un zkSNARK.

Le protocole Pinocchio permet à celui qui réalise la preuve de cacher certaines des entrées du calcul dont il fait la preuve. Dans le présent cas, il s'agit de réaliser le calcul suivant :
Entrée : l'empreinte cryptographique de la première concaténation de la donnée de lecture optique extraite et de la première donnée décodée, le cas échéant une donnée personnelle à transmettre, et un vecteur d'initialisation IV (et d'autres données publiques si besoin).
Entrée privée : la donnée de lecture optique extraite et la première donnée décodée. Sortie : la preuve π que le prouveur connaît bien la donnée de lecture optique extraite et de la première donnée décodée dont la concaténation se hache en l'empreinte cryptographique donnée, et le cas échéant à partir desquelles on peut retrouver la donnée personnelle à transmettre.

A noter que sont connus des protocoles prévus pour la génération d'une preuve de bon déroulement d'une fonction de hachage, que l'homme du métier pourra directement utiliser même s'ils ne sont pas optimaux. La difficulté est d'obtenir un temps de calcul raisonnable pour réaliser la preuve et des tailles de clés d'évaluation et de vérification qui ne sont pas trop conséquentes.
- le protocole Zerocash (IEEE Security & Privacy 2014) de Ben-Sasson et al., propose la définition d'un circuit arithmétique pour vérifier la fonction de compression de SHA-256 qui comporte environ 30 000 portes multiplicatives. Ceci donne un temps de réalisation de preuve d'environ 5 secondes (par niveau de compression, vérifier la fonction de hachage entière qui comprend de nombreuses itérations de la fonction de compression sera nettement plus long), ce qui reste élevé et largement améliorable ;
- le protocole ZKBoo, présenté dans la publication « ZKBoo : faster zero-knowledge for boolean circuits » de Giacomelli, Madsen et Orlandi (Usenix Security 2016) » permet de meilleures performances (preuve en 50 ms, vérification en 70 ms) par itération de la fonction de compression, mais la taille de la preuve est conséquente (800 Ko) d'autant plus qu'elle ne semble avoir été mesurée que sur une application de la fonction de compression.

Présentement, il est préféré un système de preuve légère mais dont la génération prend quelques secondes, de sorte à permettre une authentification rapide.

### Deuxième preuve à divulgation nulle de connaissances

Selon un mode particulièrement préféré, le présent procédé est également un procédé d'authentification de l'individu, impliquant une comparaison entre une donnée biométrique candidate et une donnée biométrique de référence.

On suppose que l'équipement client 3 dispose d'une ladite donnée biométrique candidate, et de ladite deuxième donnée encodée SSKT, ou du moins de la donnée biométrique de référence.

En ce qui concerne la donnée biométrique candidate, « fraîche », celle-ci peut être obtenue lors de l'étape préalable (a). En d'autres termes, l'équipement client 1 peut ne disposer initialement (i.e. à l'issue de l'étape d'enrôlement (a0)) d'absolument aucune donnée.

Il est important de comprendre que si l'étape d'enrôlement (a0) peut être mise en oeuvre des semaines avant la mise en oeuvre de l'authentification, l'étape (a) est au pire mise en oeuvre quelques minutes avant le reste du procédé, pour garantir la « fraicheur » de la donnée biométrique candidate.

Ainsi, l'étape (a) comprend avantageusement la génération de la donnée biométrique candidate à partir d'un trait biométrique fourni par les moyens d'acquisition biométrique de l'équipement client 3 (i.e. typiquement les moyens d'acquisition optique 30). Cela signifie par exemple que l'individu prend tout d'abord une photographie de son document d'identité 1, puis une photographie de son visage.

Pour garantir la fraicheur de la donnée candidate, l'étape (a) pourra comprendre l'horodatage de la donnée biométrique candidate au moyen d'un marqueur temporel (appelé « timestamp » en anglais).

L'homme du métier saura mettre en oeuvre un tel horodatage en utilisant des techniques connues, et avantageusement on utilise comme marqueur temporel un nonce (i.e. un nombre arbitraire, c'est-à-dire un aléa, à usage unique, de l'anglais « number used once »).

La comparaison des données biométriques peut être faite par les moyens de traitement de données 21 du serveur 2, mais il est préférable qu'elle soit faite sur l'équipement client 3 pour garantir totalement la vie privée de l'individu.

Pour cela, on peut utiliser à nouveau un protocole cryptographique générant une « preuve » que la donnée biométrique candidate et la donnée biométrique de référence coïncident, cette preuve ne révélant rien d'autre que le fait que ces données biométriques sont bien possédées par le producteur de la preuve.

En d'autres termes, on utilise deux preuves à divulgation nulle de connaissance :
- la première preuve est la preuve du calcul de ladite empreinte cryptographique à partir de la première concaténation de la donnée de lecture optique extraite et de la première donnée décodée ;
- la deuxième preuve est une preuve du fait que la donnée biométrique candidate et la donnée biométrique de référence coïncident.

On pourra utiliser de nombreuses preuves à divulgation nulle de connaissance, et notamment celles proposées dans la demande FR17599292.

De manière particulièrement préférée, dans le mode de réalisation dans lequel on a une deuxième donnée encodée SSKT obtenue par application d'une procédure d'encodage à une donnée biométrique de référence et à une deuxième donnée d'aléa RNGT, et une empreinte cryptographique construite à partir de la deuxième donnée d'aléa RNGT, on peut utiliser une procédure de décodage pour vérifier si la donnée biométrique candidate et la donnée biométrique de référence coïncident, de la même manière que ce qui a été fait pour l'information de type DPS sur la photographie.

A nouveau, lorsque la procédure d'encodage utilisée pour l'enrôlement est une procédure d'esquisse d'un algorithme de type « secure sketch », la procédure de décodage est la procédure récupération (« recovery » en anglais) du même algorithme de type « secure sketch », et l'homme du métier pourra utiliser d'autres procédures.

Mathématiquement, la procédure de décodage donne, pour une valeur de la deuxième donnée encodée SSKT et pour une donnée biométrique candidate TempCand, « la valeur x=dec(SSKT, TempCand) telle qu'il existe une valeur ε de norme inférieure à un seuil donné vérifiant SSKT=enc(x,TempCand+ε) », x étant égal à la valeur de la première donnée d'aléa RNGT si on a bien TempCand+ε=TempRef.

Ainsi, la mise en oeuvre de la comparaison comprend le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne. Ce type de calcul de distance est connu de l'Homme du Métier et ne sera pas décrit plus en détail.

Ainsi, l'étape (c) comprend en outre avantageusement le calcul par les moyens de traitement de données 31 de l'équipement client 3 de
- une deuxième donnée décodée par application d'une procédure de décodage à ladite donnée biométrique candidate et à la deuxième donnée encodée (à nouveau la donnée encodée est telle que ladite deuxième donnée décodée correspond à la deuxième donnée d'aléa RNGT si ladite donnée biométrique candidate coïncide avec la donnée biométrique de référence) ;
- une empreinte cryptographique construite à partir de la deuxième donnée décodée (on comprendra que cette empreinte cryptographique doit être construite de la même façon que la troisième empreinte cryptographique est construite à partir de la deuxième donnée d'aléa RNGT, notamment l'empreinte cryptographique d'une concaténation de la deuxième donnée d'aléa RNGT et de la première empreinte cryptographique).

Ensuite, l'étape (d) comprend la génération par les moyens de traitement de données 31 de l'équipement client 3 de la preuve à divulgation nulle de connaissances du fait que la donnée biométrique candidate et la donnée biométrique de référence coïncident, qui est en particulier une preuve du calcul de ladite empreinte cryptographique à partir de la deuxième donnée décodée, cette preuve ne révélant rien d'autre que le fait que la deuxième donnée décodée (i.e. la deuxième donnée d'aléa RNGT) sont bien possédées par le producteur de la preuve. A nouveau, la preuve vise à garantir que la troisième empreinte cryptographique a été effectivement calculée, et de manière correcte.

Plus précisément, ladite preuve à divulgation nulle de connaissances garantit l'affirmation suivante : « étant donnée une empreinte cryptographique T, il existe une deuxième donnée d'aléa RNGT (et le cas échéant une donnée de lecture optique) telle qu'une fonction donnée de cette deuxième donnée d'aléa RNGT a pour empreinte cette empreinte cryptographique T donnée ». Dans le cas précise où la troisième empreinte est l'empreinte cryptographique d'une concaténation de la deuxième donnée d'aléa RNGT et de la première empreinte cryptographique, l'affirmation garantie est la suivante : « étant donnée une empreinte cryptographique T, il existe une deuxième donnée d'aléa RNGT et une autre empreinte cryptographique H telle qu'une concaténation de cette deuxième donnée d'aléa RNGT et de cette autre empreinte cryptographique H a pour empreinte ladite empreinte cryptographique T donnée ».

La deuxième preuve à divulgation nulle de connaissance peut être générée de la même façon que la première preuve à divulgation nulle de connaissance, voir avant.

Alors, dans l'étape (e), l'équipement client 3 transmet en outre au serveur 2 ladite deuxième preuve à divulgation nulle de connaissance, et la nouvelle empreinte cryptographique calculée (la troisième empreinte).

Ainsi, dans l'étape (f), les moyens de traitement de données 21 du serveur 2 vérifient que la deuxième preuve à divulgation nulle de connaissance est valide, et que l'empreinte cryptographique reçue coïncide avec celle construite à partir de la deuxième donnée d'aléa RNGT dont dispose le serveur 2.

Si la preuve n'est pas valide, c'est que la troisième empreinte cryptographique n'a pas été obtenue de manière valide, et donc qu'il n'y a pas eu de comparaison entre les données biométriques candidate et de référence, et qu'il s'agit potentiellement d'une usurpation d'identité. Si la preuve est valide mais que l'empreinte cryptographique reçue ne coïncide pas avec celle dont dispose l'entité de vérification 2, c'est que la donnée biométrique candidate ne coïncide pas avec la donnée biométrique de référence, et donc que l'individu n'est celui attendu, i.e. l'authentification de l'individu échoue.

Si on a retrouvé la troisième empreinte et que la preuve est valide, c'est que l'identité de l'individu est confirmée, et d'autres actions peuvent survenir (la consultation d'un descripteur, l'émission d'autorisation vers l'équipement 3 ou une entité connectée, la fourniture de données de l'étape (f), etc.).

On notera qu'au lieu de mettre simultanément en oeuvre l'authentification du document 1 et l'authentification de l'individu (i.e. utiliser les mêmes étapes (a) à (f)), il est tout à fait possible de mettre en oeuvre les procédés l'un après l'autre, c'est-à-dire qu'on aura des étapes (a') à (f') pour le procédé mis en œuvre en second (en particulier le procédé d'authentification de l'individu, même si l'ordre inverse est possible).

### Serveur

Selon un deuxième aspect, est proposé l'ensemble du serveur 2 et de l'équipement client 3 connectés, pour la mise en oeuvre du procédé selon le premier aspect, i.e. d'authentification d'un document d'identité 1 d'un individu et éventuellement d'authentification dudit individu.

L'équipement client 3 comprend des moyens de traitement de données 31 configurés pour :
- Extraire, par analyse d'une image acquise (en particulier par des moyens d'acquisition optique 30 de l'équipement client 3) du document d'identité 1 représentant au moins une photographie d'un individu et une donnée de lecture optique visibles sur ledit document d'identité 1 :
   ∘ une information candidate représentative de l'apparence de ladite photographie tel que représentée dans l'image acquise ;
   ∘ ladite donnée de lecture optique tel que représentée dans l'image acquise ;
- Calculer :
   ∘ une première donnée décodée par application d'une procédure de décodage à ladite information candidate représentative de l'apparence de ladite photographie et à la première donnée encodée, telle que ladite première donnée décodée correspond à une première donnée d'aléa si ladite information candidate représentative de l'apparence de ladite photographie coïncide avec une information de référence représentative de l'apparence de ladite photographie, le serveur 2 disposant d'une empreinte cryptographique d'une première concaténation de ladite donnée de lecture optique dudit document d'identité 1 et ladite première donnée d'aléa, dite première empreinte cryptographique ;
   ∘ une empreinte cryptographique d'une première concaténation de la donnée de lecture optique extraite et de la première donnée décodée ;
   ∘ éventuellement une deuxième donnée décodée par application de la procédure de décodage à une donnée biométrique candidate et à une deuxième donnée encodée, telle que ladite deuxième donnée décodée correspond à une deuxième donnée d'aléa si ladite donnée biométrique candidate coïncide avec une donnée biométrique de référence ;
   ∘ et éventuellement une autre empreinte cryptographique construite à partir de la deuxième donnée décodée de la même manière même façon qu'une troisième empreinte cryptographique dont dispose le serveur 2 est construite à partir de la deuxième donnée d'aléa ;
- générer une preuve à divulgation nulle de connaissances du calcul de ladite empreinte cryptographique à partir de la première concaténation de la donnée de lecture optique extraite et de la première donnée décodée, ainsi qu'éventuellement une preuve à divulgation nulle de connaissances du calcul de ladite autre empreinte cryptographique à partir de la deuxième donnée décodée;
- transmettre au serveur 2 la ou lesdites preuve(s) à divulgation nulle de connaissance et la ou lesdites empreinte(s) cryptographique(s) associée(s) calculée(s) ; le serveur 2 comprend quand à lui des moyens de traitement de données 22 configurés pour vérifier que :
   ∘ la ou les preuve(s) à divulgation nulle de connaissance est(sont) valide(s), et
   ∘ la ou les empreinte(s) cryptographique(s) reçue(s) coïncide(nt) (respectivement) avec la ou lesdites première/troisième empreinte(s) cryptographique(s) dont dispose le serveur 2.

L'équipement client 3 peut en outre comprendre des moyens d'acquisition biométrique, en particulier les moyens d'acquisition optique 30, pour l'acquisition de la données biométrique candidate.

### Produit programme d'ordinateur

Selon un troisième et un quatrième aspects, l'invention concerne un produit programme d'ordinateur comprenant des instructions de code pour l'exécution (en particulier sur les moyens de traitement de données 21 du serveur 2 et les moyens de traitement de données 31 de l'équipement client 3) d'un procédé selon le premier aspect de l'invention, ainsi que des moyens de stockage lisibles par un équipement informatique (une mémoire 22 du serveur 2 et une mémoire 32 de l'équipement client 3) sur lequel on trouve ce produit programme d'ordinateur.

## Revendications

1. Procédé d'authentification d'un document d'identité (1) mis en œuvre par un serveur (2) et un équipement client (3) connectés ;
l'équipement client (3) disposant d'une première donnée encodée et d'une image acquise dudit document d'identité (1) représentant au moins une photographie d'un individu et une donnée de lecture optique visibles sur ledit document d'identité (1), et le serveur (2) disposant d'une empreinte cryptographique d'une première concaténation de ladite donnée de lecture optique dudit document d'identité (1) et d'une première donnée d'aléa, dite première empreinte cryptographique ;
le procédé comprenant la mise en œuvre d'étapes de ;
(b) Extraction, par les moyens de traitement de données (31) de l'équipement client (3), par analyse de ladite image acquise dudit document d'identité (1), de :
∘ une information candidate représentative de l'apparence de ladite photographie tel que représentée dans l'image acquise ;
∘ ladite donnée de lecture optique tel que représentée dans l'image acquise ;
(c) Calcul par les moyens de traitement de données (31) de l'équipement client (3), de :
∘ une première donnée décodée par application d'une procédure de décodage à ladite information candidate représentative de l'apparence de ladite photographie et à la première donnée encodée, telle que ladite première donnée décodée correspond à la première donnée d'aléa si ladite information candidate représentative de l'apparence de ladite photographie coïncide avec une information de référence représentative de l'apparence de ladite photographie ;
∘ une empreinte cryptographique d'une première concaténation de la donnée de lecture optique extraite et de la première donnée décodée ;
(d) génération par les moyens de traitement de données (31) de l'équipement client (3) d'une preuve à divulgation nulle de connaissances du calcul de ladite empreinte cryptographique à partir de la première concaténation de la donnée de lecture optique extraite et de la première donnée décodée;
(e) transmission au serveur (2) de ladite preuve à divulgation nulle de connaissance et de l'empreinte cryptographique calculée ;
(f) vérification par des moyens de traitement de données (21) du serveur (2) que :
∘ la preuve à divulgation nulle de connaissance est valide, et
∘ l'empreinte cryptographique reçue coïncide avec ladite première empreinte cryptographique dont dispose le serveur (2).

2. Procédé selon la revendication 1, comprenant une étape (a) d'acquisition préalable de ladite image dudit document d'identité (1) représentant au moins une photographie d'un individu et une donnée de lecture optique visibles sur ledit document d'identité (1) par des moyens d'acquisition optique (30) de l'équipement client (3).

3. Procédé selon la revendication 2, dans lequel l'équipement client (3) ne dispose initialement ni de la première donnée encodée ni de l'image acquise dudit document d'identité (1), l'étape (b) comprenant la réception par l'équipement client (3) de la première donnée encodée depuis le serveur (2).

4. Procédé selon l'une des revendications 1 à 3, dans lequel ladite preuve à divulgation nulle de connaissances du calcul de ladite empreinte cryptographique à partir de la première concaténation de la donnée de lecture optique extraite et de la première donnée décodée est une preuve à divulgation nulle de connaissances du fait qu'étant donnée une empreinte cryptographique, il existe une donnée de lecture optique et une première donnée d'aléa telles que leur première concaténation a pour empreinte ladite empreinte cryptographique donnée.

5. Procédé selon l'une des revendications 1 à 4, comprenant une étape antérieure (a0) d'enrôlement de données dudit document d'identité (1) comprenant des sous-étapes de :
(A) Obtention de la photographie dudit individu visible sur ledit document d'identité (1) et de la donnée de lecture optique du document d'identité (1) ;
(B) Extraction par analyse de ladite photographie de l'information de référence représentative de l'apparence de ladite photographie ;
(C) Génération de la première donnée d'aléa ; calcul de la première donnée encodée par application d'une procédure d'encodage à ladite information de référence représentative de l'apparence de ladite photographie et à ladite première donnée d'aléa, et de la première empreinte cryptographique ;
et optionnellement (D) stockage sur des moyens de stockage de données (22) du serveur (2) de la première donnée encodée et de la première empreinte cryptographique.

6. Procédé selon l'une des revendications 1 à 5, étant en outre un procédé d'authentification de l'individu, dans lequel l'étape (d) comprend la génération par les moyens de traitement de données (31) de l'équipement client (3) d'une preuve à divulgation nulle de connaissances du fait qu'une donnée biométrique de référence et une donnée biométrique candidate de l'individu coïncident ; l'étape (e) comprenant la transmission au serveur (2) de ladite preuve à divulgation nulle de connaissance du fait que la donnée biométrique de référence et la donnée biométrique candidate de l'individu coïncident ; et l'étape (f) comprenant la vérification par les moyens de traitement de données (21) du serveur (2) que la preuve à divulgation nulle de connaissance du fait que la donnée biométrique de référence et la donnée biométrique candidate de l'individu coïncident est valide.

7. Procédé selon la revendication 6, dans lequel l'équipement client (3) dispose en outre d'une deuxième donnée encodée et de la donnée biométrique candidate de l'individu, et le serveur (2) dispose d'une empreinte cryptographique construite à partir d'une deuxième donnée d'aléa, dite troisième empreinte cryptographique ; l'étape (c) comprenant le calcul par les moyens de traitement de données (31) de l'équipement client (3) de :
∘ une deuxième donnée décodée par application d'une procédure de décodage à ladite donnée biométrique candidate et à la première donnée encodée, telle que ladite deuxième donnée décodée correspond à la deuxième donnée d'aléa si ladite donnée biométrique candidate coïncide avec la donnée biométrique de référence ;
∘ une empreinte cryptographique construite à partir de la deuxième donnée décodée de la même manière que la troisième empreinte cryptographique est construite à partir de la deuxième donnée d'aléa ;
ladite preuve à divulgation nulle de connaissances du fait que la donnée biométrique de référence et la donnée biométrique candidate de l'individu coïncident étant une preuve à divulgation nulle de connaissances du calcul de ladite empreinte cryptographique à partir de la première concaténation de la donnée de lecture optique extraite et de la première donnée décodée; l'étape (e) comprenant en outre la transmission au serveur (2) de l'empreinte cryptographique calculée ; et l'étape (f) comprenant en outre la vérification par des moyens de traitement de données (21) du serveur (2) que l'empreinte cryptographique reçue coïncide avec ladite troisième empreinte cryptographique dont dispose le serveur (2).

8. Procédé selon les revendications 5 et 7 en combinaison, dans lequel lors de l'étape (a0), la sous-étape (A) ou la sous-étape (B) comprend l'obtention de ladite donnée biométrique de référence ; et la sous-étape étape (C) comprend en outre la génération de la deuxième donnée d'aléa et le calcul de la deuxième donnée encodée par application de ladite procédure d'encodage à ladite donnée biométrique de référence et à ladite deuxième donnée d'aléa, et de la troisième empreinte cryptographique.

9. Procédé selon l'une des revendications 6 à 7, dans lequel la troisième empreinte cryptographique est l'empreinte cryptographique d'une concaténation de la deuxième donnée d'aléa et de la première empreinte cryptographique.

10. Procédé selon l'une des revendications 6 à 9 en combinaison avec la revendication 2, dans lequel l'étape (a) comprend en outre la génération de la donnée biométrique candidate à partir d'un trait biométrique fourni par des moyens d'acquisition biométrique, de préférence les moyens d'acquisition optique (30) de l'équipement client (3), l'équipement client (3) étant en particulier un équipement électronique personnel audit individu.

11. Procédé selon l'une des revendications 1 à 10, dans lequel l'étape (f) comprend également la transmission au serveur (2) d'une donnée personnelle cible de l'individu, la preuve à divulgation nulle de connaissances du calcul de ladite empreinte cryptographique à partir de la première concaténation de la donnée de lecture optique extraite et de la première donnée décodée également une preuve du fait que l'au moins une donnée personnelle cible à transmettre est sélectionnée parmi des données personnelles associées au document d'identité (1) ; ladite donnée personnelle dudit individu étant en particulier une donnée alphanumérique associé audit individu.

12. Procédé selon l'une des revendications 1 à 11, dans lequel l'équipement client (3) dispose en outre d'un chiffré avec l'empreinte cryptographique d'une deuxième concaténation de la donnée de lecture optique du document d'identité (1) et de la première donnée d'aléa, différente de la première concaténation, d'au moins une donnée personnelle dudit individu, dite deuxième concaténation ; le procédé comprenant le déchiffrement du chiffré de l'au moins une donnée personnelle dudit individu, au moyen de l'empreinte cryptographique de la deuxième concaténation de la donnée de lecture optique extraite et de la donnée décodée.

13. Procédé selon la revendication 11 et 12 en combinaison, dans lequel ladite donnée personnelle cible est soit extraite de la donnée de lecture optique, soit l'au moins une donnée personnelle chiffrée.

14. Produit programme d'ordinateur comprenant des instructions de code pour l'exécution d'un procédé selon l'une des revendications 1 à 13 d'authentification d'un document d'identité (1), lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 13 d'authentification d'un document d'identité (1).

## Patentansprüche

1. Verfahren zur Authentifizierung eines Identitätsdokuments (1), das von einem Server (2) und von einer Client-Ausrüstung (3), die verbunden sind, durchgeführt wird;
wobei die Client-Ausrüstung (3) über ein erstes codiertes Datenelement und ein aufgenommenes Bild des Identitätsdokuments (1) verfügt, die mindestens eine Fotografie einer Person und ein optisch ausgelesenes Datenelement darstellen, die auf dem Identitätsdokument (1) sichtbar sind, und der Server (2) über einen Hashwert einer ersten Konkatenation des optisch ausgelesenen Datenelements des Identitätsdokuments (1) und ein erstes Zufallsdatenelement, bezeichnet als erster Hashwert, verfügt;
wobei das Verfahren die Durchführung der Schritte umfasst
(b) Extraktion, durch die Datenverarbeitungsmittel (31) der Client-Ausrüstung (3), durch Analyse des aufgenommenen Bildes des Identitätsdokuments (1):
∘ einer Kandidateninformation, die für das Erscheinungsbild der Fotografie repräsentativ ist, wie auf dem aufgenommenen Bild dargestellt;
∘ des optisch ausgelesenen Datenelements, wie auf dem aufgenommenen Bild dargestellt;
(c) Berechnen, durch die Datenverarbeitungsmittel (31) der Client-Ausrüstung (3):
∘ eines ersten decodierten Datenelements durch Anwenden eines Decodierungsprozederes auf die Kandidateninformation, die für das Erscheinungsbild der Fotografie repräsentativ ist, und auf das erste codierte Datenelement, so dass das erste decodierte Datenelement dem ersten Zufallsdatenelement entspricht, wenn die Kandidateninformation, die für das Erscheinungsbild der Fotografie repräsentativ ist, mit einer Referenzinformation übereinstimmt, die für das Erscheinungsbild der Fotografie repräsentativ ist;
∘ eines Hashwerts einer ersten Konkatenation des extrahierten optisch ausgelesenen Datenelements und des ersten decodierten Datenelements;
(d) Generieren, durch die Datenverarbeitungsmittel (31) der Client-Ausrüstung (3), eines Zero-Knowledge-Kenntnisbeweises der Berechnung des Hashwerts ausgehend von der ersten Konkatenation des extrahierten optisch ausgelesenen Datenelements und des ersten decodierten Datenelements;
(e) Übertragen des Zero-Knowledge-Kenntnisbeweises und des berechneten Hashwerts an den Server (2);
(f) Verifizieren, durch die Datenverarbeitungsmittel (21) des Servers (2), dass:
∘ der Zero-Knowledge-Kenntnisbeweis gültig ist, und
∘ der empfangene Hashwert mit dem ersten Hashwert übereinstimmt, über den der Server (2) verfügt.

2. Verfahren nach Anspruch 1, umfassend einen Schritt (a) des vorherigen Erfassens des Bildes des Identitätsdokuments (1), das mindestens eine Fotografie einer Person und ein optisch ausgelesenes Datenelement darstellt, die auf dem Identitätsdokument (1) sichtbar sind, durch optische Erfassungsmittel (30) der Client-Ausrüstung (3).

3. Verfahren nach Anspruch 2, wobei die Client-Ausrüstung (3) zunächst weder über das erste codierte Datenelement noch über das aufgenommene Bild des Identitätsdokuments (1) verfügt, wobei der Schritt (b) den Empfang des ersten codierten Datenelements ab dem Server (2) durch die Client-Ausrüstung (3) umfasst.

4. Verfahren nach einem der Ansprüche 1 bis 3, wobei der Zero-Knowledge-Kenntnisbeweis der Berechnung des Hashwerts ausgehend von der ersten Konkatenation des extrahierten optisch ausgelesenen Datenelements und des ersten decodierten Datenelements ein Zero-Knowledge-Kenntnisbeweis ist, da es in Anbetracht eines Hashwerts ein optisch ausgelesenes Datenelement und ein erstes Zufallsdatenelement gibt, die derart sind, dass deren erste Konkatenation als Hashwert den gegebenen Hashwert hat.

5. Verfahren nach einem der Ansprüche 1 bis 4, umfassend einen späteren Schritt (a0) des Speicherns von Daten des Identitätsdokuments (1), umfassend folgende Unterschritte:
(A) Erhalten der Fotografie der Person, die auf dem Identitätsdokument (1) sichtbar ist, und des optisch ausgelesenes Datenelements des Identitätsdokuments (1);
(B) Extrahieren der für das Erscheinungsbild der Fotografie repräsentativen Referenzinformation durch Analyse der Fotografie;
(C) Generieren des ersten Zufallsdatenelements; Berechnen des ersten codierten Datenelements durch Anwenden eines Codierungsverfahrens auf die für das Erscheinungsbild der Fotografie repräsentative Referenzinformation und auf das erste Zufallsdatenelement, und des ersten Hashwerts;
und optional (D) Speichern des ersten codierten Datenelements und des ersten Hashwerts auf Datenspeichermitteln (22) des Servers (2).

6. Verfahren nach einem der Ansprüche 1 bis 5, das ferner ein Verfahren zur Authentifizierung der Person ist, wobei der Schritt (d) des Generierens, durch die Datenverarbeitungsmittel (31) der Client-Ausrüstung (3), eines Zero-Knowledge-Kenntnisbeweises aufgrund der Tatsache umfasst, dass ein biometrisches Referenz-Datenelement und ein biometrisches Kandidaten-Datenelement der Person übereinstimmen; wobei der Schritt (e) die Übertragung des Zero-Knowledge-Kenntnisbeweises an den Server (2) aufgrund der Tatsache umfasst, dass das biometrische Referenz-Datenelement und das biometrische Kandidaten-Datenelement der Person übereinstimmen; und wobei der Schritt (f) die Verifizierung durch die Datenverarbeitungsmittel (21) des Servers (2) umfasst, dass der Zero-Knowledge-Kenntnisbeweis aufgrund der Tatsache, dass das biometrische Referenz-Datenelement und das biometrische Kandidaten-Datenelement der Person übereinstimmen, gültig ist.

7. Verfahren nach Anspruch 6, wobei die Client-Ausrüstung (3) ferner über ein zweites codiertes Datenelement und das biometrische Kandidaten-Datenelement der Person verfügt, und der Server (2) über einen Hashwert verfügt, der ausgehend von einem zweiten Zufallsdatenelement, bezeichnet als dritter Hashwert, konstruiert ist; wobei der Schritt (c) das Berechnen, durch die Datenverarbeitungsmittel (31) der Client-Ausrüstung (3), umfasst:
∘ eines zweiten decodierten Datenelements durch Anwenden eines Decodierungsprozederes auf das biometrische Kandidaten-Datenelement und auf das erste codierte Datenelement, so dass das zweite decodierte Datenelement dem zweiten Zufallsdatenelement entspricht, wenn das biometrische Kandidaten-Datenelement mit dem biometrischen Referenz-Datenelement übereinstimmt;
∘ eines Hashwerts, der ausgehend vom zweiten decodierten Datenelement auf dieselbe Art und Weise konstruiert ist, wie der dritte Hashwert ausgehend vom zweiten Zufallsdatenelement konstruiert ist;
wobei der Zero-Knowledge-Kenntnisbeweis aufgrund der Tatsache, dass das biometrische Referenz-Datenelement und das biometrische Kandidaten-Datenelement der Person übereinstimmen, ein Zero-Knowledge-Kenntnisbeweis der Berechnung des Hashwerts ausgehend von der ersten Konkatenation des extrahierten optisch ausgelesenen Datenelements und des ersten decodierten Datenelements ist; wobei der Schritt (e) ferner die Übertragung des berechneten Hashwerts an den Server (2) umfasst; und der Schritt (f) ferner die Verifizierung durch Datenverarbeitungsmittel (21) des Servers (2) umfasst, dass der empfangene Hashwert mit dem dritten Hashwert übereinstimmt, über den der Server (2) verfügt.

8. Verfahren nach den Ansprüchen 5 und 7 in Kombination, wobei beim Schritt (a0) der Unterschritt (A) oder der Unterschritt (B) den Erhalt des biometrischen Referenz-Datenelements umfasst; und der Unterschritt Schritt (C) ferner das Generieren des zweiten Zufallsdatenelements und die Berechnung des zweiten codierten Datenelements durch Anwenden des Codierungsprozederes auf das biometrische Referenz-Datenelement und auf das zweite Zufallsdatenelement umfasst, und des dritten Hashwerts.

9. Verfahren nach einem der Ansprüche 6 bis 7, wobei der dritte Hashwert der Hashwert einer Konkatenation des zweiten Zufallsdatenelements und des ersten Hashwerts ist.

10. Verfahren nach einem der Ansprüche 6 bis 9 in Kombination mit Anspruch 2, wobei der Schritt (a) ferner das Generieren des biometrischen Kandidaten-Datenelements ausgehend von einem von biometrischen Erfassungsmitteln, vorzugsweise den optischen Erfassungsmitteln (30) der Client-Ausrüstung (3), gelieferten biometrischen Merkmal umfasst, wobei die Client-Ausrüstung (3) insbesondere eine persönliche elektronische Ausrüstung der Person ist.

11. Verfahren nach einem der Ansprüche 1 bis 10, wobei der Schritt (f) ebenfalls die Übertragung eines persönlichen Zieldatenelements der Person an den Server (2) umfasst, wobei der Zero-Knowledge-Kenntnisbeweis der Berechnung des Hashwerts ausgehend von der ersten Konkatenation des extrahierten optisch ausgelesenen Datenelement und des ersten decodierten Datenelements ebenfalls ein Beweis der Tatsache ist, dass das mindestens eine zu übertragende persönliche Zieldatenelement aus persönlichen Daten ausgewählt ist, die dem Identitätsdokument (1) zugeordnet sind; wobei das persönliche Datenelement der Person vor allem ein alphanumerisches Datenelement ist, das der Person zugeordnet ist.

12. Verfahren nach einem der Ansprüche 1 bis 11, wobei die Client-Ausrüstung (3) ferner über eine Chiffrierung mit dem Hashwert einer zweiten Konkatenation des optisch ausgelesenen Datenelements des Identitätsdokuments (1) und des ersten Zufallsdatenelements, die sich von der ersten Konkatenation unterscheidet, von mindestens einem persönlichen Datenelement der Person, bezeichnet als zweite Konkatenation, verfügt; wobei das Verfahren die Dechiffrierung der Chiffrierung des mindestens einen persönlichen Datenelements der Person mittels des Hashwerts der zweiten Konkatenation des extrahierten optisch ausgelesenen Datenelements und des decodierten Datenelements umfasst.

13. Verfahren nach Anspruch 11 und 12 in Kombination, wobei das persönliche Zieldatenelement entweder aus dem optisch ausgelesenen Datenelement extrahiert ist oder das mindestens eine verschlüsselte persönliche Datenelement ist.

14. Rechnerprogrammprodukt, umfassend Codebefehle für die Ausführung eines Authentifizierungsverfahrens eines Identitätsdokuments (1) nach einem der Ansprüche 1 bis 13, wenn das Verfahren auf einem Rechner ausgeführt wird.

15. Speichermittel, das von einer IT-Ausrüstung lesbar ist, wobei ein Rechnerprogrammprodukt Codebefehle für die Ausführung eines Authentifizierungsverfahrens eines Identitätsdokuments (1) nach einem der Ansprüche 1 bis 13 umfasst.

## Claims

1. A method of authenticating an identity document (1) implemented by a server (2) and client device (3) that are connected thereto;
the client device (3) having first encoded data and an image acquired of said identity document (1) representing at least a photograph of an individual and an optically readable data that are visible on said identity document (1), and the server (2) having a hash value of a first concatenation of said optically readable data of said identity document (1) and of a first random data, called first hash value;
the method comprising the implementation of steps of:
(b) Extraction, by the data processing means (31) of the client device (3), by analysis of said image acquired from said identity document (1), of:
∘ candidate information representative of the appearance of said photograph as represented in the acquired image;
∘ said optically readable data as represented in the acquired image;
(c) Calculation by the data processing means (31) of the client device (3) of:
∘ a first decoded data by application of a decoding process to said candidate information representative of the appearance of said photograph and to the first encoded data, such that said first decoded data corresponds to the first random data if said candidate information representative of the appearance of said photograph matches a reference information representative of the appearance of said photograph;
∘ a hash value of a first concatenation of the extracted optically readable data and of the first decoded data;
(d) generation by the data processing means (31) of the client device (3) of a zero-knowledge proof of the calculation of said hash value from the first concatenation of the extracted optically readable data and of the first decoded data;
(e) transmission to the server (2) of said zero-knowledge proof of the calculated hash value;
(f) verification by the data processing means (21) of the server (2) that:
∘ the zero-knowledge proof is valid, and
∘ the received hash value matches said first hash value possessed by the server (2).

2. The method according to claim 1, comprising a step (a) of preliminary acquisition of said image of said identity document (1) representing at least a photograph of an individual and optically readable data visible on said identity document (1) by optical acquisition means (30) of the client device (3).

3. The method according to claim 2, wherein the client device (3) initially has neither the first encoded data nor the acquired image of said identity document (1), the step (b) comprising the reception by the client device (3) of the first encoded data from the server (2) .

4. The method according to any of claims 1 to 3, wherein said zero-knowledge proof of the calculation of said hash value from the first concatenation of the extracted optically readable data and of the first decoded data is a zero-knowledge proof of the fact that, given a hash value, there is an optically readable data and a first random data such that the first concatenation thereof has said given hash value for hash value

5. The method according to any of claims 1 to 4, comprising a prior step (a0) of enrollment of data from said identity document (1) comprising sub-steps of:
(A) Obtaining the photograph of said individual visible on said identity document (1) and of the optically readable data from the identity document (1);
(B) Extracting by analysis of said photograph reference information representative of the appearance of said photograph;
(C) Generating the first random data; calculating the first encoded data by application of an encoding process to said reference information representative of the appearance of said photograph and to said first random data, and the first hash value;
and optionally (D) storing on data storage means (22) of the server (2) the first encoded data and the first hash value.

6. The method according to any of claims 1 to 5, the method further being a method of authentication of the individual, wherein the step (d) comprises the generation by the data processing means (31) of the client device (3) of a zero-knowledge proof of the fact that a reference biometric data and a candidate biometric data of the individual match; the step (e) comprising the transmission to the server (2) of said zero-knowledge proof of the fact that the reference biometric data and the candidate biometric data of the individual match; and the step (f) comprising the verification by the data processing means (21) of the server (2) that the zero-knowledge proof of the fact that the reference biometric data and the candidate biometric data of the individual match is valid.

7. The method according to claim 6, wherein the client device (3) further has a second encoded data and a candidate biometric data of the individual, and the server (2) has a hash value constructed from a second random data, called third hash value; the step (c) comprising the calculation by the data processing means (31) of the client device (3) of:
∘ a second decoded data by application of a decoding process to said candidate biometric data and to the first encoded data, such that said second decoded data corresponds to the second random data if said candidate biometric data matches with the reference biometric data;
∘ a hash value constructed from the second decoded data in the same way as the third hash value is constructed from the second random data;
said zero-knowledge proof of the fact that the reference biometric data and the candidate biometric data of the individual match being a zero-knowledge proof of the calculation of said hash value from the first concatenation of the extracted optically readable data and of the first decoded data; the step (e) further comprising the transmission to the server (2) of the calculated hash value; and the step (f) further comprising the verification by data processing means (21) of the server (2) that the received hash value matches said third hash value in the possession of the server (2).

8. The method according to claims 5 and 7 in combination, wherein during the step (a0), the sub-step (A) or the sub-step (B) comprises obtaining said reference biometric data; and the sub-step (C) further comprises the generation of the second random data and the calculation of the second encoded data by application of said encoding process to said reference biometric data and to said second random data, and of the third hash value.

9. The method according to any of claims 6 to 7, wherein the third hash value is the hash value of a concatenation of the second random data and the first hash value.

10. The method according to any of claims 6 to 9, in combination with claim 2, wherein the step (a) further comprises the generation of the candidate biometric data from a biometric trait furnished by biometric acquisition means, preferably the optical acquisition means (30) of the client device (3), the client device (3) being in particular electronic equipment personal to said individual.

11. The method according to any of claims 1 to 10, wherein the step (f) also comprises the transmission to the server (2) of a target personal data of the individual, the zero-knowledge proof of the calculation of said hash value from the first concatenation of the extracted optically readable data and of the first decoded data as well a proof of the fact that the at least one target personal data to be transmitted is selected from among personal data associated with the identity document (1); said personal data of said individual being in particular an alphanumeric data associated with said individual.

12. The method according to any of claims 1 to 11, wherein the client device (3) further has an encryption with the hash value of a second concatenation of the optically readable data from the identity document (1) and of the first random data, different from the first concatenation, of at least one personal data of said individual, called second concatenation; the method comprising the decryption of the encryption of the at least one personal data of said individual, by means of the hash value of the second concatenation of the extracted optically readable data and of the decoded data.

13. The method according to claim 11 and 12 in combination, wherein said target personal data is either extracted from the optically readable data, or from the at least one encrypted personal data.

14. A computer program product comprising coding instructions for the execution of a method according to any of claims 1 to 13 for authentication of an identity document (1), when said method is executed on a computer.

15. A storage means readable by computer equipment on which a computer program product comprises coding instructions for the execution of a method according to any of claims 1 to 13 for authentication of an identity document.
